# EUROPÄISCHE PATENTANMELDUNG

(11) **EP 1 947 039 A1**
(43) Veröffentlichungstag der Anmeldung: **23.07.2008**
(21) Anmeldenummer: 07001108.5
(22) Anmeldetag: 19.01.2007
(51) Int. Cl.: B65G 69/18, B65D 90/62

(54) **Kupplungsverschluß sowie Andockeinrichtung, enthaltend zwei dieser Kupplungsverschlüsse**

(71) Anmelder: GEA Niro GmbH, 79379 Müllheim (DE)
(72) Erfinder: Koch, Martin, 79395 Neuenburg-Grissheim (DE); Lais, Peter, 79373 Müllheim (DE); Philipp, Gunter, 79585 Steinen (DE); Stoye, Joachim, 79395 Neuenburg-Grissheim (DE)
(74) Vertreter: Metten, Karl-Heinz

(57) **Zusammenfassung**

Die vorliegende Erfindung betrifft einen Kupplungsverschluß für eine Andockeinrichtung zum, insbesondere umweltisolierten, Umfüllen, Befüllen und/oder Entleeren von Behältnissen mit einer Verschlußseite und einer Behälterseite, umfassend einen Rohrstutzen und eine darin verschwenkbar um eine Achse gelagerte Schließklappe, enthaltend eine der Verschlußseite in der Schließstellung zugewandte Außenseite. Ferner betrifft die Erfindung eine Andockeinrichtung zum, insbesondere umweltisolierten, Umfüllen, Befüllen und/oder Entleeren von Behältnissen, umfassend über ihre jeweiligen Verschlußseiten aneinander bündig anlegbare erste und zweite erfindungsgemäße Kupplungsverschlüsse. Außerdem betrifft die Erfindung eine Arbeitsplattform sowie eine Verriegelungseinheit für eine Andockeinrichtung und ein Verfahren zum, insbesondere umweltisolierten, Umfüllen, Befüllen und/oder Entleeren von Behältnissen.

## Beschreibung

Die folgende Erfindung betrifft einen Kupplungsverschluß zum, insbesondere umweltisolierten, Umfüllen, Befüllen und/oder Entleeren von Behältnissen sowie eine Andockeinrichtung enthaltend zwei erfindungsgemäße miteinander gekuppelte bzw. kuppelbare Kupplungsverschlüsse. Ferner betrifft die Erfindung eine Arbeitsplattform zum Betätigen der erfindungsgemäßen Andockeinrichtung sowie ein Verfahren zum Umfüllen, Befüllen und/oder Entleeren von Behältnissen unter Verwendung der erfindungsgemäßen Andockeinrichtung.

In vielen Bereichen insbesondere der weiterverarbeitenden Industrie werden häufig hohe Anforderungen an die Reinheit der eingesetzten Ausgangsprodukte gestellt, weshalb Kontaminationen durch Verunreinigungen an jeder Stelle des Verfahrensablaufes, und nicht nur bei der Herstellung und Isolierung der Ausgangsprodukte zu vermeiden sind. Häufig läßt sich jedoch beim Abfüllen der fertiggestellten Ausgangsprodukte in geeignete Gebinde sowie beim Umfüllen derselben zwecks Weiterverarbeitung zu Zwischen- oder Endprodukten ein Kontakt mit der Umgebung nicht vollständig vermeiden. Bereits hierdurch kann die Qualität der weiterverarbeiteten Produkte nachhaltig in Mitleidenschaft gezogen werden. Gegebenenfalls sind Produktchargen sogar komplett zu verwerfen. Andererseits ist insbesondere bei toxischen Verbindungen dafür Sorge zu tragen, daß Mensch und Umwelt mit diesen Substanzen nicht in Kontakt kommen, was ebenfalls ein sehr sorgfältiges umweltisoliertes Arbeiten erforderlich macht. Häufig genügt erst das Arbeiten unter Reinstraumbedingungen den Anforderungen, um toxische Substanzen in geeignete Verarbeitungsgebinde umfüllen zu können. Jedenfalls geht sowohl bei dem Bestreben, wertvolle Ausgangsprodukte nicht zu verunreinigen, als auch mit der Zielssetzung, die Umwelt nicht mit toxischen Verbindungen zu kontaminieren, ein hoher apparativer und sicherheitstechnischer Aufwand einher, der sich zwangsläufig auch bei den Herstellungskosten niederschlägt. Hohe Anforderungen an kontaminationsfreies Arbeiten werden z.B. regelmäßig von der lebensmittelverarbeitenden, der chemischen oder der pharmazeutischen Industrie gestellt, beispielsweise wenn Produkte in Form von Schüttgut oder Fluiden aus einem feststehenden ersten Behältnis in ein transportables zweites Behältnis zu überführen sind. Da manche Produkte schon in äußerst geringen Mengen sehr toxisch auf den menschlichen Organismus wirken und andere Produkte sehr empfindlich auf z.B. Lufteinwirkung reagieren, wurden seitens der Industrie effektive Kopplungselemente bzw. Andockeinrichtungen entwickelt, die ein Befüllen oder ein Entleeren eines Behältnisses in einem isolierten oder zumindest staubreinen Zustand ermöglichen sollen.

Für den kontaminationsfreien Transfer von Schüttgut haben sich Systeme, die sich der Halbklappentechnik bedienen, bewährt. Derartige Systeme werden zum Beispiel in der DE 695 04 581 T2 beschrieben. Auch aus der DE 43 42 962 C1 und DE 44 15 488 C2 sind Andocksysteme bekannt, bei denen Schließklappen in den Ein- und Ausgangsstutzen von zu kuppelnden Behältnissen flächig aneinander zur Anlage gebracht werden, um sodann aus einer Schließstellung in eine der den Durchgangskanal zumindest teilweise freigebenden Position um eine eigene Achse verschwenkt zu werden.

Um den apparativen Aufwand und die Kosten bei den ohnehin aufwendigeren Geräten, die sich zum Schüttguttransfer der Halbklappentechnik bedienen, im Rahmen zu halten, ist regelmäßig nur eine der Schließklappen dafür vorgesehen, über einen Antrieb oder manuell verschwenkt zu werden, auch Aktivklappe genannt. Die an der Aktivklappe anliegende Schließklappe, auch Passivklappe genannt, wird durch die Bewegung der Aktivklappe mitgenommen. Nachteilig bei solchen Systemen ist regelmäßig, daß nur eine zu der Aktivklappe korrespondierende Passivklappe ein funktionsfähiges Andocksystem zum kontaminationsfreien Transfer von Schüttgut liefert. Demgemäß ist dafür Sorge zu tragen, daß für jeden zu verwendenden Behälter stets die passende Klappenkonfiguration vorliegt. Ist beispielsweise entweder nur die Passivklappe oder die Aktivklappe defekt oder nicht auffindbar, kann das Andocksystem als ganzes nicht mehr eingesetzt werden. Ein weiterer Nachteil konventioneller Andockeinrichtungen auf der Basis der Halbklappentechnik besteht in der mangelnden Flexibilität und Anwendungsfreundlichkeit dieses Systems. Die konstruktiv aufwendigere und kostenintensivere Aktivklappe einer solchen Andockeinrichtung wird nahezu ausschließlich an einem feststehenden Container, den es zu Befüllen oder Entleeren gilt, angebracht, während die Passivklappe an einen mobilen Container oder ein mobiles Fördermittel, beispielsweise einen Schlauch oder ein Rohr, montiert vorliegt. Der direkte Schüttguttransfer von Container zu Container über den Einsatz von Passiv- und Aktivklappen ist mangels Praktikabilität selten anzutreffen.

Ein weiterer Nachteil bei Verwendung von Andockeinrichtungen, die aus einer Aktivklappe und einer Passivklappe gebildet werden, wird insbesondere bei Schließklappen mit großer Nennweite, beispielsweise im Bereich von 300 - 400 mm oder darüber, beobachtet. Bei der Drehung der Aktivklappe wird das Drehmoment auf die Passivklappe regelmäßig entfernt von der gemeinsamen Drehachse auf die Passivklappe übertragen. Hierbei kommt es häufig auf der gegenüberliegenden Seite im Bereich des umlaufenden Randes von Aktiv- und Passivklappe zu der Bildung eines Spaltes, in welchen Schüttgut eindringen kann. Bei der Entkopplung ist dann eine Kontamination der Umgebung mit Schüttgut nicht mehr zu verhindern, es sei denn, man greift auf aufwendige Absaug- und/oder Reinigungsvorrichtungen zurück, wie zum Beispiel in der DE 44 15 488 C2 oder der DE 214 871 U1 offenbart.

Es wäre daher wünschenswert, auf Andockeinrichtungen sowie die diese Andockeinrichtungen bildenden Kupplungsverschlüsse zurückgreifen zu können, die nicht mehr mit den genannten Nachteilen den Stands der Technik behaftet sind. Der vorliegenden Erfindung lag daher die Aufgabe zugrunde, Kupplungsverschlüsse sowie Andockeinrichtungen zur Verfügung zu stellen, die sich auch im Dauergebrauch zuverlässig handhaben lassen, die einfach zu bedienen sind und denen in der Handhabungsbreite bzw. Flexibilität der Handhabung keine Beschränkungen auferlegt sind.

Demgemäß wurde ein Kupplungsverschluß für eine Andockeinrichtung zum, insbesondere umweltisolierten, Umfüllen, Befüllen und/oder Entleeren von Behältnissen mit einer Verschlußseite und einer Behälterseite gefunden, umfassend einen Rohrstutzen und eine darin verschwenkbar um eine Achse gelagerte Schließklappe, enthaltend eine der Verschlußseite in der Schließstellung zugewandte Außenseite, wobei die Schließklappe an mindestens einer Seite, insbesondere auf beiden Seiten, längs der Achse mit einer Partialwelle oder einem Partialwellenstummel in jeweils zur Verschlußseite hin offenem Lager gelagert ist, wobei die Partialwelle(n) oder -wellenstummel geeignet ist (sind), um bei Anlage mit komplementären Partialwellen bzw. -wellenstummeln eines weiteren Kupplungsverschlusses eine Welle oder einen Wellenstummel auszubilden, wobei die Partialwelle oder der -wellenstummel mit mindestens einem Eingriffselement ausgestattet ist, in das ein komplementäres Eingriffselement, das, z. B. über eine Antriebswelle, in Wirkverbindung mit einem Antrieb bringbar ist oder steht einführbar ist.

Das komplementäre Eingriffselement ist zur Übertragung eines Drehmoments auf die Schließklappe des Kupplungsverschlusses ausgelegt und geeignet, die Drehbewegung der Antriebswelle auf die Schließklappe durch Wechselwirkung mit dem Eingriffselement der Partialwelle oder des -wellenstummels zu übertragen.

Bevorzugt ist hierbei unter anderem eine solche Ausführungsform, bei der die Partialwelle oder der -wellenstummel mit einer Stirnfläche in axialer Richtung ausgestattet ist, in bzw. auf der das Eingriffselement vorliegt, das axial in ein komplementäres Eingriffselement, das in Wirkverbindung mit einem Antrieb bringbar ist oder steht, einführbar ist.

Dabei kann vorgesehen sein, daß die Schließklappe auf ihrer Außenseite mit mindestens einem Dichtungsabschnitt oder mindestens einer, insbesondere umlaufenden, Dichtung versehen ist, die zumindest abschnittsweise am oder benachbart zum Umfangsrand angeordnet ist.

Hierbei sind solche Ausführungsformen von Vorteil, bei denen die Dichtungsabschnitte kreissegmentförmig und/oder rotationssymmetrisch angeordnet sind und/oder die gleiche Länge aufweisen.

Solche erfindungsgemäßen Kupplungsverschlüsse sind besonders praktikabel, bei denen die Schließklappe auf ihrer Außenseite zwei über diese Außenseite hervorstehende Dichtungsabschnitte verfügt, die in der Weise geformt und dimensioniert sind, daß mit einem im wesentlichen identischen Satz an Dichtungsabschnitten eine im wesentlich durchgängig umlaufende Dichtung erhältlich ist. Derartige Kupplungsverschlüsse sind geeignet, mit baugleichen Kupplungsverschlüssen eine umweltdichte erfindungsgemäße Andockeinrichtung auszubilden, bei der ein umlaufender Dichtungsring zwischen den Außenseiten der Schließklappen der beiden Kupplungsverschlüsse vorliegt. Geeigneterweise unterteilt man die umlaufende Dichtung der Andockeinrichtung in vier gleich lange Dichtungsabschnitte, von denen zwei von einem ersten Kupplungsverschluß und zwei weitere von einem zweiten Kupplungsverschluß zur Verfügung gestellt werden. Zweckmäßigerweise beginnt der erste Dichtungsabschnitt des ersten Kupplungsverschlusses im Bereich der Drehachse, d.h. benachbart zu einem Wellenstummel, und erstreckt sich über einen Umfangswinkel von 90°. Der zweite Dichtungsabschnitt beginnt dann an der Drehachse des gegenüberliegenden Wellenstummels und erstreckt sich wiederum über einen Umfangswinkel von 90°. Selbstverständlich ist es ebenfalls möglich, für die Ausbildung einer erfindungsgemäßen Andockeinrichtung zwei identische Kupplungsverschlüsse zu verwenden, bei denen auf der Außenseite der Schließklappe eine umlaufende Dichtung vorliegt, die permanent über der Außenseite hervorsteht. Bei gegenseitiger Anlage dieser Kupplungsverschlüsse über ihre Verschlußseiten kommen dann diese beiden Dichtungsringe gegeneinander zur Anlage. Bei solchen Systemen kann regelmäßig das Ausmaß des Hervortretens des Dichtungsrings über die Außenseite hinaus abgeschwächter ausgeprägt sein.

Erfindungsgemäß kann weiter vorgesehen sein, daß der Rohrstutzen innenseitig zumindest bereichsweise, insbesondere vollumfänglich, mit einer Rohrstutzendichtung ausgestattet ist.

Eine weitere vorteilhafte Ausgestaltung sieht vor, daß die Außenseite der Schließklappe in der Schließstellung zumindest abschnittsweise mit dem der Verschlußseite zugewandten Rand des Rohrstutzens oder die Rohrstutzendichtung im wesentlichen fluchtend anordbar ist.

Gemäß einer weiteren Ausgestaltung kann vorgesehen sein, daß mindestens eine Partialwelle bzw. ein -wellenstummel auf der der Verschlußseite zugewandten Seite zumindest abschnittsweise Auslassungen zum Eingriff für komplementäre Partialwellen bzw. - wellenstummel aufweist, insbesondere zumindest abschnittsweise in Form einer Halbachse vorliegt.

Bevorzugt ist bzw. sind das/die Lager in Form von zur Verschlußleiste hin offenen Halbschalen ausgebildet. Bevorzugt sind ferner solche Lager- bzw. Lagerschalen, die Nut-Feder-Wechselwirkungen mit der Partialwelle bzw. dem -wellenstummel zulassen, so daß diese Partialwelle bzw. dieser -wellenstummel sowie die damit verbundene Schließklappe stets sicher in dem Rohrstutzen vorliegen und jedenfalls bei gattungsgemäßen Verbrauch unverlierbar mit diesem verbunden sind.

Dabei kann vorgesehen sein, daß in Schließstellung die Außenseite der Schließklappe und die nicht in dem Lager gelagerte, insbesondere abgeflachte, Seite der Partialwelle bzw. des - wellenstummels zumindest bereichsweise fluchtend anordbar oder angeordnet sind.

Das Eingriffelement stellt bevorzugt mindestens eine Nut und/oder mindestens einen Vorsprung, insbesondere einen Dorn dar. Das Eingriffselement ist im allgemeinen derart auszugestalten, daß es für eine Kraftübertragung und damit eine Verschwenkung der Schließklappe in Frage kommt.

Selbstverständlich sind mit den erfindungsgemäßen Kupplungsverschlüssen auch solche umfaßt, die, insbesondere über ihre Rohrstutzen, bereits mit einem Behälter oder Fördermittel, z.B. einen Schlauch oder Rohr, dichtend verbunden oder verbindbar sind. Hierbei kann der Rohrstutzen unter anderem auch Bestandteil des Behälters oder Fördermittels sein oder sogar einstückig mit diesem Behälter oder Fördermittel vorliegen.

Von besonderem Vorteil sind solche erfindungsgemäßen Kupplungsverschlüsse, bei denen das Lager, insbesondere ein in dem Rohrstutzen vorliegender Lagerschaleneinsatz, mindestens bereichsweise, insbesondere vollständig, aus mindestens einem Kunststoffmaterial, insbesondere aus Polyamid, Polyetherketon (PEK), Polyetheretherketon (PEEK), Polyetherimid, Polybutylenterephthalat (PBT), Polyketonen, Polyimiden, Polyphenylenether, Polyaryletherketonen, Polyacrylnitril, Polyvinylchlorid, Polyolefinen und/oder Polyoxymethylen, gefertigt ist. Somit ist es möglich, das Lager bzw. die Lagerschale separat und in einem anderen Material auszuführen als den Rohrstutzen. Indem man für das Lager bzw. die Lagerschale ein Kunststoffmaterial wählt, insbesondere ein abriebsfestes Kunststoffmaterial, wie vorangehend ausgeführt, ist es möglich, die gesamte Kupplungsvorrichtung und damit auch die aus zwei solchen Kupplungsvorrichtungen gebildete erfindungsgemäßen Andockeinrichtung vollständig schmiermittelfrei zu betreiben. Dieser Aspekt ist für den dauerhaft kontaminationsfreien Transfer von empfindlichen Schüttgut, bei dem selbst geringste Verunreinigungen zu vermeiden sind, beispielsweise bei pharmazeutischen Anwendungen, von nicht geringer Bedeutung.

In einer weiteren Ausführungsform verfügen erfindungsgemäße Kupplungsverschlüsse zudem über durch mindestens einen, insbesondere zwei, Anschläge, an den Seitenflächen des Rohrstutzens benachbart zu mindestens einem Lager. Indem der Anschlag über die Seitenwandung des Rohrstutzens hinausragt, kann in Wechselwirkung mit einer Führeinrichtung eine positionsgenaue Justierung der Partialwelle bzw. des -wellenstummels vor der Antriebswelle eines Antriebs vorgenommen werden. Dieses gelingt insbesondere dann besonders gut, wenn der Anschlag bzw. die Anschläge zur Justierung in zwei Dimensionen ausgelegt ist. Hierbei ist zum einen die Positionierung in axialer Richtung diesseits und jenseits der sich gegenüberliegenden Partialwellen bzw. -wellenstummel und zum anderen die seitliche Justierung in der Ebene der Schließklappe bei verschlossener Position von Vorteil.

Gemäß einer Weiterentwicklung der erfindungsgemäßen Kupplungsverschlüsse kann vorgesehen sein, daß das Eingriffselement und/oder die Partialwelle oder der -wellenstummel mindestens ein Partialarretierelement geeignet zur Ausbildung eines ersten Arretierelements mit einem Partialarretierelement eines korrespondierenden Kupplungsverschlusses aufweist. Indem man die Partialwellen oder -wellenstummel oder die Eingriffselemente des Kupplungsverschlusses mit Partialarretierelementen versieht, kann bereits durch das Ineingriffbringen der Eingriffselemente zweier korrespondierender, eine Andockeinrichtung bildenden Kupplungsverschlüsse sichergestellt werden, daß diese bzw. deren Schließklappen während des gesamten Schüttguttransfers dicht gegeneinander verriegelt bzw. arretiert bleiben.

Besonders bevorzugt ist hierbei vorgesehen, daß das Partialarretierelement zumindest abschnittsweise eine der Behälterseite zugewandte, insbesondere in Bezug auf die Drehachse der Schließklappe radiale, Anlagefläche, und/oder in der Stirnseite von Partialwelle oder - wellenstummel eine zumindest abschnittsweise, insbesondere radial umlaufende, Nut oder Feder umfaßt, geeignet zur Anlage bzw. Aufnahme zumindest eines Teils eines korresponderienden zweiten Arretierelements unter Ausbildung einer Arretiereinheit. Eine besonders zweckmäßige Ausgestaltung zeichnet sich dadurch aus, daß das Partialarretierelement Bestandteil des Eingriffselements ist. Ist das Eingriffselement des Kupplungsverschlusses beispielsweise eine Nut oder eine Teilnut, kann das Partialarretierelement darin als Ausbuchtung, Erhebung oder keilförmiger Fortsatz mit einer angeschrägten Fläche vorliegen, über die Kraft in Richtung der Verschlußseite des Kupplungsverschlusses beaufschlagt werden kann.

Die der Erfindung zugrunde liegende Aufgabe wird des weiteren durch eine Andockeinrichtung zum, insbesondere umweltisolierten, Umfüllen, Befüllen und/oder Entleeren von Behältnissen gelöst, umfassend über ihre jeweiligen Verschlußseiten aneinander bündig anlegbare oder anliegende erste und zweite Kupplungsverschlüsse erfindungsgemäße wobei die Außenseiten der jeweiligen Schließklappen aneinander anliegen oder aneinander zur Anlage bringbar sind und in aneinander angelegtem Zustand aus einer Schließstellung, in der sie den durch den Rohrstutzen des ersten Kupplungsverschlusses und den Rohrstutzen des zweiten Kupplungsverschlusses gebildeten Transferkanal verschließen, um eine gemeinsame Achse in eine Öffnungsstellung schwenkbar sind.

Besonders bevorzugt sind hierbei zumindest der Rohrstutzen, die Rohrstutzendichtung, die Schließklappe und/oder die Partialwelle bzw. der -wellenstummel von erstem und zweitem Kupplungsverschluß, insbesondere der erste und zweite Kupplungsverschluß, im wesentlichen baugleich.

Dabei kann unter anderem auch vorgesehen sein, daß die Rohrstutzen, insbesondere die Rohrstutzendichtungen, von erstem und zweitem Kupplungsverschluß bei Anlage derselben gegeneinander bündig abschließen.

Vorzugsweise sind bei den erfindungsgemäßen Andockeinrichtungen die Schließklappen der zum Einsatz kommenden Kupplungsverschlüsse im wesentlichen identisch dimensioniert sowie insbesondere im wesentlichen kreisförmig ausgebildet.

Eine zweckmäßige Weiterbildung sieht ferner vor, die Partialwellen bzw. -wellenstummel von erstem und zweitem Kupplungsverschluß unter Ausbildung einer Welle oder eines Wellenstummels in den durch die Lagerschalen von erstem und zweitem Kupplungsverschluß gebildeten Lagern um eine gemeinsame Achse schwenkbar sind.

Zur leichteren Handhabung der erfindungsgemäßen Andockeinrichtungen können diese ferner mindestens eine Führungsvorrichtung für mindestens eine Partialwelle oder einen - wellenstummel mindestens einer Schließklappe aufweisen.

Besonders vorteilhaft sind solche Andockeinrichtungen, bei denen die Eingriffselemente der eine Welle oder einen Wellenstummel bildenden Partialwellen bzw. -wellenstummel ein einheitliches Eingriffselement für ein korrespondierendes Eingriffselement einer Antriebswelle, insbesondere in Form einer Nut oder eines Doms, bilden.

Zweckmäßigerweise können die erfindungsgemäßen Andockeinrichtungen zudem über mindestens eine Antriebswelle oder eine mit einem Antrieb in Wirkverbindung bringbare Welle verfügen, die mit mindestens einem Eingriffselement ausgestattet ist, das komplementär zu mindestens einem Eingriffselement von erstem oder zweitem Kupplungsverschluß, insbesondere zu dem einheitlichen Eingriffselement von erstem und zweitem Kupplungsverschluß, ist, so daß bei Eingriff dieser einander komplementären Eingriffselemente die aneinander anliegenden Schließklappen über den Antrieb schwenkbar sind.

Hierbei kann auch eine Antriebswelle mit umfaßt sein, die in Wirkverbindung mit dem Antrieb steht. Diese Antriebswelle ist vorzugsweise in einem dem Antrieb insbesondere vorgelagerten Wellenlager gelagert.

Insbesondere wenn baugleiche erfindungsgemäße Kupplungsverschlüsse für die erfindungsgemäße Andockeinrichtung verwendet werden sollen, ist von Vorteil, daß die Dichtungen der Schließklappen von erstem und zweitem Kupplungsverschluß jeweils nur abschnittsweise über deren Außenseiten hervorstehen, wobei diese Abschnitte der Dichtungen von erstem und zweitem Kupplungsverschluß bei aneinander anliegenden Außenseiten der Schließklappen eine im wesentlichen durchgängige Dichtung ausbilden.

Ein besonders sicheres Arbeiten mit der erfindungsgemäßen Andockeinrichtung gelingt insbesondere dadurch, daß die Rohrstutzen von erstem und zweitem Kupplungsverschluß, insbesondere auf jeweils einander gegenüberliegenden Bereichen der Seitenwände oder benachbart hierzu, über Kraftbeaufschlagungspunkte, beispielsweise Vorsprünge oder Fortsätze, verfügen, über die im gekuppelten Zustand die Außenseiten von erstem und zweitem Kupplungsverschluß gegeneinander preßbar und/oder die Rohrstutzen von erstem und zweitem Kupplungsverschluß gegeneinander reversibel arretierbar sind.

Hierbei verwendet man vorzugsweise eine Verriegelungseinheit, mit der aus im wesentlichen einander gegenüberläufigen Richtungen, insbesondere jeweils aus behälterseitiger Richtung, die Kraftbeaufschlagungspunkte von erstem und zweitem Kupplungsverschluß mit Kraft beaufschlagbar sind. Eine solche erfindungsgemäße Verriegelungseinheit, die geeignet ist für die Verriegelung zweier Rohrstutzen von erfindungsgemäßen Kupplungsverschlüssen, umfaßt einen um eine Achse drehbaren Körper mit einer Verriegelungsseite, wobei auf der Verriegelungsseite des Körpers mindestens ein erstes hervortretendes Element und mindestens ein zweites hervortretendes Element angebracht sind oder vorliegen, wobei das erste und das zweite Element zumindest bereichsweise in einer Ebene liegen, die im wesentlichen einen Winkel zur Drehachse aufweist, insbesondere senkrecht zur Drehachse steht, wobei das erste Element und das zweite Element jeweils einen Abstand zur Drehachse aufweisen, der kleiner ist als der Abstand von erstem und zweitem Element zueinander, und wobei die ersten und zweiten Elemente durch Rotation des Körpers um die Drehachse von einer Verriegelungsstellung in eine Öffnungsstellung und umgekehrt bringbar sind.

Bei dem drehbar um eine Achse gelagerten Körper kann es sich beispielsweise um eine Strebe oder eine drehbar gelagerte Scheibe handeln. Die Drehachse dieses Körpers steht vorzugsweise senkrecht auf der durch die Verriegelungsseite des Körpers aufgespannten Fläche und ist von dieser Verriegelungsseite abgewandt orientiert. Diese Drehachse schneidet die Verbindungsseite in einem Punkt, wobei dieser Schnittpunkt der Drehachse mit der Verbindungsseite zwischen dem ersten und zweiten Element liegt und insbesondere auf der Verbindungslinie von erstem und zweitem Element. Die einander gegenüberliegenden ersten und zweiten Elemente der Verriegelungseinheit sind jeweils vorzugsweise mit Druckbeaufschlagungsflächen, vorzugsweise in zumindest abschnittsweise konkav gewölbter Form, ausgestattet. Die zur Verriegelung zweier Kupplungsverschlüsse einzusetzenden Kräfte sind bei solchen Verriegelungseinheiten besonders gering, bei denen das erste und/oder zweite Element in Form einer Rolle bzw. Zylinder, vorzugsweise in Form einer um eine Achse drehbar gelagerten Rolle bzw. eines um eine Achse drehbar gelagerten Zylinders gestaltet ist bzw. sind. Die Drehachse dieser Rollen bzw. eines Zylinders ist vorzugsweise im wesentlichen parallel zur Drehachse des Körpers ausgerichtet.

Eine besonders praktikable Ausführungsform einer erfindungsgemäßen Andockeinrichtung umfaßt ferner eine Arbeits- bzw. Andockplattform, auf der mindestens ein, insbesondere zwei Antriebe sowie gegebenenfalls mindestens eine, insbesondere zwei Verriegelungseinheiten und/oder mindestens ein, insbesondere zwei Wellenlager für eine Antriebswelle angebracht sind.

Des weiteren können erfindungsgemäße Andockeinrichtungen dadurch gekennzeichnet sein, daß der Rohrstutzen von erstem und/oder zweitem Kupplungsverschluß im Bereich der Partialwellen oder -wellenstummel mindestens einen Anschlag und/oder mindestens eine Führeinrichtung für das Wellenlager der Antriebswelle oder den Antrieb aufweist.

Eine Weiterentwicklung der erfindungsgemäßen Andockeinrichtung zeichnet sich dadurch aus, daß die Eingriffselemente und/oder die Partialwellen oder die -wellenstummel von erstem und zweitem Kupplungsverschluß jeweils mindestens ein Partialarretierelement geeignet zur Ausbildung eines ersten Arretierelements aufweisen und daß das komplementäre Eingriffselement oder die Antriebswelle ein zu dem ersten Arretierelement korrespondierendes zweites Arretierelement aufweist und daß durch Relativbewegung von erstem und zweitem Arretierelement aufeinander zu eine Arretiereinheit ausbildbar ist, wodurch die ersten und zweiten Kupplungsverschlüsse gegeneinander pressbar und/oder arretierbar sind. Diese Ausgestaltung nutzt den Umstand, daß für die Betätigung der aneinander anliegenden Schließklappen der angedockten Kupplungsverschlüsse die Eingriffselemente der Partialwellen bzw. -wellenstummel bzw. der aus diesen gebildeten Gesamtwelle bzw. -wellenstummel mit dem komplementären Eingriffselement der Antriebswelle in Eingriff zu bringen ist. Indem nun Partialarretierelemente bei den jeweiligen Kupplungsverschlüssen vorgesehen werden, die gemeinsam ein erstes Arretierelement ausbilden, das mit einem hierzu korrespondierenden zweiten Arretierelement der Antriebswelle bzw. des komplementären Eingriffselements unter Ausbildung einer Arretiereinheit wechselwirken kann, kann allein durch den geschilderten Vorgang des Ineingriffbringens der Eingriffselemente eine Arretierung bzw. ein Aneinanderpressen der Kupplungsverschlüsse bzw. der Außenseiten der aneinander anliegenden Schließklappen bewerkstelligt werden. Auf diese Weise wird zwangsläufig sichergestellt, daß beim Betrieb der erfindungsgemäßen Andockeinrichtung die jeweiligen Kupplungsverschlüsse stets fest arretiert aneinander vorliegen.

In einer bevorzugten Ausführungsform umfassen die Partialarretierelemente von erstem und zweitem Kupplungsverschluß jeweils zumindest abschnittsweise eine der Behälterseite zugewandte, insbesondere in Bezug auf die gemeinsame Drehachse der Schließklappen radiale, Anlagefläche und/oder in den Stirnseiten der Partialwellen oder -wellenstummel eine, insbesondere jeweils zumindest abschnittsweise radial umlaufende, Nut und/oder Feder. Besonders bevorzugt bilden bei dieser Ausführungsform die Partialarretierelemente im Querschnitt gewölbte, insbesondere halbkreisförmige Anlageflächen aus. Im angedockten Zustand bilden diese Anlageflächen der Partialarretierelemente von erstem und zweitem Kupplungsverschluß vorzugsweise eine zylinderförmige Gestalt in Form des ersten Arretierelements aus. Bei dem hierzu korrespondierenden zweiten Arretierelement handelt es sich dann vorzugsweise um eine an oder auf der Antriebswelle vorliegende zylinderförmige Hülse, in die das erste Arretierelement, insbesondere paßgenau, eingeführt werden kann. Hierbei sind der Innendurchmesser des zweiten Arretierelements und der Außendurchmesser des ersten Arretierelements in für den Fachmann bekannter Weise aufeinander abzustimmen, um ein stets störungsfreies reversibles Arretieren und Lösen zu bewerkstelligen, ohne Einbußen bei der Funktion des Arretierens hinnehmen zu müssen. Ein weiterer Vorteil bei der Verwendung eines zweiten Arretierelements, das das erste Arretierelement im wesentlichen aufnimmt, ist, daß nicht nur ein Entkoppeln der angedockten Kupplungsverschlüsse des Transfervorgangs verhindert wird, sondern daß zusätzlich ein seitliches Verschieben der Kupplungsverschlüsse gegeneinander ausgeschlossen wird. Auf diese Weise wird die Betriebssicherheit nochmal um ein weiteres erhöht.

Alternativ kann, wie vorangehend dargestellt, in der Stirnseite, beispielsweise umlaufend, von Partialwelle bzw. -wellenstummel eine Feder oder Nut vorliegen, die in eine korrespondierende Feder bzw. Nut im Bereich der Stirnfläche der Antriebswelle beim Ineingriffbringen der korrespondierenden Eingriffselemente ebenfalls ineinander geführt werden können. Auch bei dieser Konstruktion kann neben der Entkopplungsbewegung gleichfalls ein seitliches Verschieben der Kupplungsverschlüsse unterbunden werden.

Eine weitere vorteilhafte Ausgestaltung sieht vor, daß die Partialarretierelemente von erstem und zweitem Kupplungsverschluß Bestandteil der Eingriffselemente von erstem bzw. zweitem Kupplungsverschluß sind und insbesondere ein erstes Arretierelement, insbesondere in Form eines Keils, Kegels oder Kegelstumpfes, ausbilden. Die Partialarretierelemente ermöglichen bei dieser Variante eine Kraftbeaufschlagung beim Ineingriffbringen der korrespondierenden Eingriffselemente jeweils in Richtung der Verschlußseite des zugehörigen Kupplungsverschlusses. Auf diese Weise werden beim Ineingriffbringen der Eingriffselemente die Kupplungsverschlüsse gegeneinander gepreßt.

Insbesondere in Bezug auf die vorangehend geschilderte Ausführungsform ist von Vorteil, wenn die Stirnfläche des komplementären Eingriffselements in einem Winkel zueinander stehende und einander zugewandte erste und zweite Kontaktflächen aufweist, wobei bei axialer Relativbewegung des komplementären Eingriffselements zum Ineingriffbringen der Eingriffselemente bzw. des Gesamteingriffselements von erstem und zweitem Kupplungsverschluß mit dem komplementären Eingriffselement die erste Kontaktfläche des komplementären Eingriffselements mit dem Eingriffselement des ersten Kupplungsverschlusses in Berührung bringbar ist und die zweite Kontaktfläche des komplementären Eingriffselements mit dem Eingriffselement des zweiten Kupplungsverschlusses in Berührung bringbar ist, wodurch die ersten und zweiten Kupplungsverschlüsse gegeneinander preßbar und/oder arretierbar sind.

Erfindungsgemäß kann ferner vorgesehen sein, daß die Partialwellen oder -wellenstummel des ersten und zweiten Kupplungsverschlusses jeweils zumindest bereichsweise über eine, insbesondere in Bezug auf die Drehachse radiale, Anschlagsfläche als Partialarretierelemente verfügen, die unter Ausbildung eines ersten Arretierelements zumindest bereichsweise voneinander weg und zur jeweiligen Behälterseite des Kupplungsverschlusses weisen, und daß das komplementäre Eingriffselement und/oder die Antriebswelle als korrespondierendes zweites Arretierelement stirnseitig über einander im wesentlichen gegenüberliegende und einander zumindest bereichsweise zugewandte, insbesondere in Bezug auf die Drehachse radiale, Kontaktflächenabschnitte verfügen, durch die beim Ineingriffbringen der Eingriffselemente bzw. des Gesamteingriffselements von erstem und zweiten Kupplungsverschluß mit dem komplementären Eingriffselement durch Wechselwirkung mit den Anschlagsflächen von erstem und zweitem Kupplungsverschluß diese gegeneinander preßbar und/oder arretierbar sind.

Hierbei kann vorgesehen sein, daß das korrespondierende zweite Arretierelement einen, insbesondere zumindest abschnittsweise das komplementäre Eingriffselement umgebenden, Zylinderabschnitt umfaßt.

Die vorangehend dargestellte Weiterentwicklung einer erfindungsgemäßen Andockeinrichtung macht den Einsatz separater Verriegelungseinheiten, mit denen die angedockten Kupplungsverschlüsse während des Schüttguttransfers gegeneinander gehalten werden, überflüssig. Dieses stellt sowohl konstruktiv als auch verfahrensseitig eine Vereinfachung dar, ohne jedoch Einbußen bei der Betriebssicherheit hinnehmen zu müssen. Indem bei jedem Ineingriffbringen der korrespondierenden Eingriffselemente von Gesamtwelle bzw. -wellenstummel und der Antriebswelle zwangsläufig eine Arretierung bzw. ein Aneinanderpressen der angedockten Kupplungsverschlüsse eintritt, wird die Gefahr von Betriebsstörungen vielmehr nochmals verringert.

Selbstverständlich ist es ebenfalls möglich, die geschilderten Arretiereinheiten auf beiden Seiten der Drehachse, d.h. bei beiden Wellen bzw. Wellenstummeln vorzusehen, und zwar insbesondere auch dann, wenn die gekoppelten Schließklappen der angedockten Kupplungsverschlüsse nicht nur über einen Antrieb, sondern über zwei Antriebe, die jeweils an gegenüber liegenden Seiten der Drehachse vorliegen, gedreht werden.

Die der vorliegenden Erfindung zugrunde liegende Aufgabe wird des weiteren gelöst durch eine Arbeits- bzw. Andockplattform, auch Öffnungswerkzeug genannt, für eine Andockeinrichtung zum, insbesondere umweltdichten Transfer von Schüttgut, umfassend mindestens einen, insbesondere zwei auf einer Plattform angebrachte Antriebe, eine Durchgangsöffnung in der Plattform für einen Kupplungsverschluß einer Andockeinrichtung sowie gegebenenfalls mindestens eine, insbesondere mindestens zwei Verriegelungseinheiten für die Arretierung und/oder das Zusammenpressen der Außenseiten von Schließklappen angedockter Kupplungsverschlüsse einer Andockeinrichtung und/oder mindestens ein Wellenlager für eine Antriebswelle, die mit dem Antrieb in Wirkverbindung steht. Besonders bevorzugt umfaßt diese Arbeitsplattform ferner mindestens einen erfindungsgemäßen Kupplungsverschluß. Die Andockplattform verfügt somit gemäß den vorangehenden Ausführungen auf einer Seite über mindestens einen Antrieb sowie gegebenenfalls mindestens eine Verriegelungseinheit und/oder mindestens ein Wellenlager. Diese Baueinheiten sind im allgemeinen fest mit der Plattform der Andockplattform verbunden, so daß die Andockplattform in jeder beliebigen Position zum Einsatz kommen kann. Beispielsweise können die genannten Baueinheiten auf der Plattform aufliegen oder diese Plattform kann um 180° gedreht sein, so daß diese Baueinheiten hängend befestigt sind. Selbstverständlich kann neben der beschriebenen, im wesentlichen horizontalen Ausrichtung die Plattform für den Transfervorgang zwischen zwei gekuppelten Kupplungsverschlüssen auch eine vertikale Anordnung einnehmen. Ferner kann in einer weiteren Ausgestaltung mindestens einer der Kupplungsverschlüsse bereits fest mit der Plattform verbunden sein. Die Plattform eignet sich z.B. in einer Ausführungsvariante zur festen Verbindung mit einem Container. Diese Ausführungsform wird bevorzugt dann gewählt, wenn ein Container mit kleineren Gebinden bzw. Gebinden mit kleiner Nennweite zu befüllen ist. Die Kupplungsverschlüsse dieser Gebinden lassen sich in der Regel unproblematisch mit dem bereits in der Arbeitsplattform vorliegenden Kupplungsverschluß verbinden, ohne die jeweiligen Einzelbestandteile zu beschädigen. Kommen jedoch größere und/oder schwerere Gebinde zum Einsatz oder solche mit Öffnungen größerer Nennweite, hat es sich als vorteilhaft erwiesen, die Andockplattform und/oder den in der Durchgangsöffnung der Arbeitsplattform vorliegenden Kupplungsverschluß flexibel bzw. schwimmend zu lagern. Beispielsweise kann der Kupplungsverschluß über einen elastischen Balg mit einem Container verbunden sein. Ferner ist es alternativ oder zusätzlich möglich, die Plattform mit elastischen Ständern bzw. Füßen zu versehen, um eine gewisse Flexibilität zu gewährleisten, so daß beim Andockvorgang zweier Kupplungsverschlüsse Ausweichbewegungen derselben möglich sind. In einer weiteren Ausgestaltung kann die erfindungsgemäße Andockplattform eine Hubeinrichtung aufweisen. Auf diese Weise gelingt es z.B., einen Kupplungsverschluß an einen korrespondierenden Kupplungsverschluß unter Ausbildung einer erfindungsgemäßen Andockeinrichtung, beispielsweise pneumatisch oder hydraulisch, heranzufahren.

Schließlich wird die der Erfindung zugrunde liegende Aufgabe gelöst durch ein Verfahren zum, insbesondere umweltisolierten, Umfüllen, Befüllen und/oder Entleeren von Behältnissen, umfassend die Schritte:
- Zurverfügungstellung eines ersten mit einem ersten Behältnis verbundenen erfindungsgemäßen Kupplungsverschlusses, wobei die Schließklappe sich in der Schließstellung befindet,
- Zurverfügungstellung eines zweiten mit einem zweiten Behältnis verbundenen erfindungsgemäßen Kupplungsverschlusses, wobei die Schließklappe sich in der Schließstellung befindet,
- Kuppeln der ersten und zweiten Kupplungsverschlüsse über ihre jeweiligen Verschlußseiten unter Ausbildung einer erfindungsgemäßen Andockeinrichtung,
- Inwirkverbindungbringen der Antriebswelle eines Antriebs mit der Welle der Andockeinrichtung unter Ineingriffbringen des Eingriffelements der Welle der Andockeinrichtung mit der komplementären Eingriffseinheit der Antriebswelle,
- Schwenken der aneinander anliegenden Schließklappen aus der Schließstellung in eine den Transferkanal zumindest teilweise freigebende Stellung durch Betätigen des Antriebs,
- Überführen von Schüttgut aus dem ersten Behältnis in das zweite Behältnis, oder umgekehrt,
- Schwenken der aneinander anliegenden Schließklappen in die Schließstellung durch Betätigen des Antriebs,
- Entkoppeln von erstem und zweitem Kupplungsverschluß unter Trennung der Andockeinrichtung.

Dabei kann vorgesehen sein, daß vor dem Schwenken der aneinander anliegenden Schließklappen aus der Schließstellung die gekoppelten Kupplungsverschlüsse der Andockeinrichtung durch mindestens eine, insbesondere mindestens zwei Kraftbeaufschlagungseinrichtungen gegeneinander arretiert und/oder gepresst werden und daß nach dem Schwenken der aneinander anliegenden Schließklappen zurück in die Schließstellung die Kraftbeaufschlagungseinrichtung die ersten und zweiten Kupplungsverschlüsse wieder freigibt.

Der vorliegenden Erfindung lag die überraschende Erkenntnis zugrunde, daß sich sehr kontaminationsarme und gleichzeitig anwendungsfreundliche Andockeinrichtungen durch Verwendung zweier Passivklappen erhalten lassen, die im gekoppelten Zustand über geeignete Arretierelemente mit einem separaten externen Antrieb um eine gemeinsame Achse verschwenkt werden können. Hierdurch wird es erstmalig ermöglicht, mit zwei im wesentlichen baugleichen Kupplungsverschlüssen ein funktionsfähiges Andocksystem zu erhalten. Demgemäß kann auf den Einsatz von speziell aufeinander abgestimmten Aktiv- und Passivklappen vollständig verzichtet werden. Überdies tritt bei den erfindungsgemäßen Andockeinrichtungen selbst bei Verwendung von Schließklappen mit sehr großen Nennweiten keine Spaltbildung mehr auf. Ein weiterer großer Vorteil der erfindungsgemäßen Kupplungsverschlüsse bzw. des erfindungsgemäßen Andocksystems gründet sich in der großen Handhabungsbreite. So kann erstmalig unproblematisch und ohne großen Aufwand Schüttgut von einem feststehenden Container in einen mobilen Container, oder umgekehrt, transferiert werden. Der Nutzer ist nicht mehr darauf festgelegt, darauf zu achten, eine Aktivklappe ausschließlich mit dem feststehenden Container zu verwenden und eine hierzu korrespondierende Passivklappe bereit zu halten. Hierdurch läßt sich unter anderem auch der Einsatz von Schläuchen oder Rohren zum Schüttguttransfer zwischen zwei Containern wenn nicht vermeiden, so doch jedenfalls zurückdrängen, womit sich wiederum der Reinigungsaufwand erheblich reduzieren läßt. Auch sind bei Verwendung von Schläuchen oder Rohren zum Transfer zwischen zwei Containern regelmäßig zwei separate Andocksysteme erforderlich gewesen. Hierauf kann bei Verwendung der erfindungsgemäßen Kupplungsverschlüsse und Andockeinrichtungen verzichtet werden.

Weitere Vorteile, Merkmale und Anwendungsmöglichkeiten der vorliegenden Erfindung ergeben sich aus der folgenden Beschreibung eines bevorzugten Ausführungsbeispiels in Verbindung mit den anliegenden Zeichnungen. In diesen Zeichnungen zeigen
- Figur 1: eine perspektivische Darstellung eines erfindungsgemäßen Kupplungsverschlusses, betrachtet von der Verschlußseite,
- Figur 2: eine perspektivische Draufsicht auf die Behälterseite des Kopplungsverschlusses gemäß Figur 1,
- Figur 3: eine perspektivische Draufsicht auf eine erfindungsgemäße Andockplattform,
- Figur 4: eine perspektivische Draufsicht auf einen Kupplungsverschluß gemäß Figur 1 und eine Andockplattform gemäß Figur 3,
- Figur 5: eine perspektivische Draufsicht auf eine erfindungsgemäßen Andockeinrichtung,
- Figur 6: eine perspektivische Draufsicht auf die Andockeinrichtung gemäß Figur 5 im vollständig angedockten, verschlossenen Zustand,
- Figur 7: eine perspektivische Draufsicht auf die Andockeinrichtung gemäß Figur 6 im geöffneten Zustand,
- Figur 8: eine perspektivische Draufsicht auf eine erfindungsgemäße Andockeinrichtung mitsamt Arbeitsplattform im noch nicht angedockten Zustand,

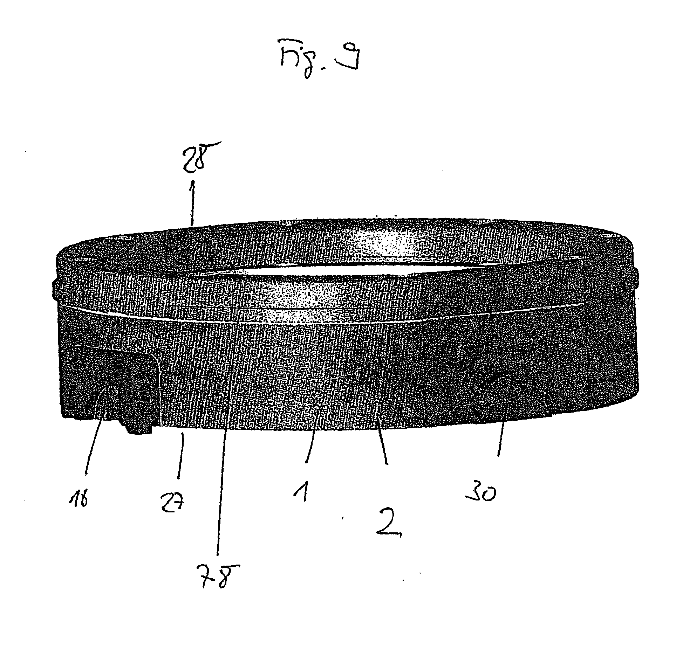

- Figur 9: eine perspektivische Seitenansicht eines erfindungsgemäßen Kupplungsverschlusses,
- Figur 10: eine perspektivische Seitenansicht einer erfindungsgemäßen Verriegelungseinheit und eines Teils einer erfindungsgemäßen Andockeinrichtung,
- Figur 11: eine schematische Draufsicht auf die Verriegelungseinheit gemäß Figur 10,
- Figur 12: die Verriegelungseinheit gemäß Figur 10 im Schließzustand,
- Figur 13: eine schematische Draufsicht auf die Verriegelungseinheit gemäß Figur 12,
- Figur 14: eine schematische Draufsicht auf einen Teilausschnitt der erfindungsgemäßen Andockeinrichtung,
- Figur 15: eine perspektivische Draufsicht auf einen Teilausschnitt der erfindungsgemäßen Andockeinrichtung,
- Figur 16: eine perspektivische Seitenansicht eines Teilausschnitts eines erfindungsgemäßen Kupplungsverschlusses,
- Figur 17: die Ansicht gemäß Figur 16 ohne Lagerschale,
- Figur 18: die perspektivische Draufsicht auf eine erfindungsgemäßen Lagerschale,
- Figur 19: die schematische perspektivische Ansicht der Stirnseite einer Antriebswelle einer alternativen Ausführungsform der erfindungsgemäßen Andockeinrichtung,
- Figur 20: die schematische perspektivische Ansicht der Stirnseiten der Partialwellenstummel gekoppelter Kupplungsverschlüsse der alternativen Ausführungsform der erfindungsgemäßen Andockeinrichtung,
- Figur 21a), b): die schematische Querschnittsansicht des Ineingriffbringens der Eingriffselemente gemäß den Figuren 19 und 20, und
- Figur 22a), b): die schematische Querschnittsansicht des Ineingriffbringens der Eingriffselemente einer alternativen Ausführungsform einer Arretiervorrichtung einer erfindungsgemäßen Andockeinrichtung.

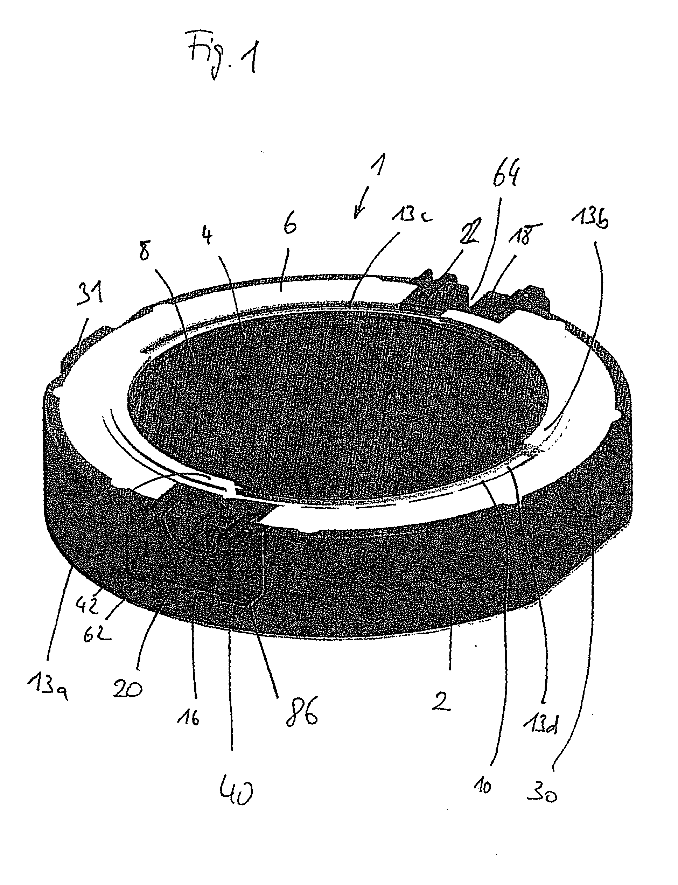

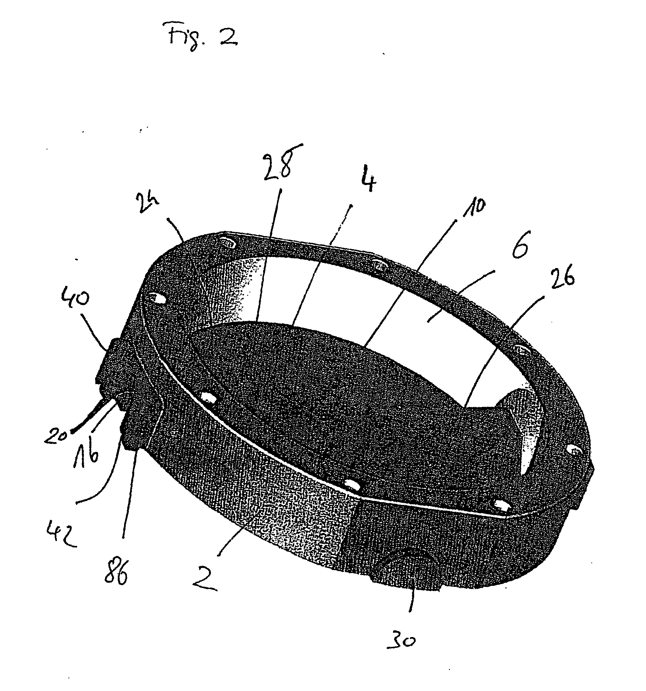

Figur 1 zeigt einen erfindungsgemäßen Kupplungsverschluß 1 von der Kupplungs- bzw. Verschlußseite in perspektivischer Draufsicht. Der Kupplungsverschluß verfügt über einen Rohrstutzen 2 mit im wesentlichen kreisförmiger Grundform, in den eine Schließklappe 4 eingelassen ist. Die abgebildete Kupplungsseite des Rohrstutzens sowie der innen liegende Bereich (nicht abgebildet) ist mit einer umlaufenden Rohrstutzendichtung 6 versehen. Auf der Kupplungsseite des Rohrstutzens 2 ist diese Dichtung 6 in der dargestellten Ausführungsform derart ausgeführt, daß sie in der Schließstellung im wesentlichen in einer Ebene mit der Außenseite 8 der Schließklappe, d.h. fluchtend vorliegt. Die Schließklappe 4 verfügt im Bereich des Umfangsrandes 10 über einen in die Außenseite 8 eingelassenen Dichtring 12 bzw. Dichtungsabschnitte. Der abgebildete Dichtring verfügt über insgesamt vier im wesentlichen gleich lange Kreissegmente (a) bis (d), wobei die sich jeweils einander gegenüberliegenden Segmente im wesentlichen übereinstimmen. Die Segmente (a) und (b) ragen über die Außenfläche 8 der Schließkappe 4 hinaus, während die Segmente (c) und (d) in die umlaufende Nut 12 der Außenseite 8 der Schließklappe 4 geringfügig eingelassen sind. Auf diese eingelassenen Segmente kann wahlweise auch vollständig verzichtet werden. Bei der vorangehend geschilderten Gestaltung der Dichtung 12 kann bereits mit einem weiteren, baugleichen Kupplungsverschluß eine dichte erfindungsgemäße Andockeinrichtung erhalten werden. Hierbei greifen dann die erhabenen Dichtungsbereiche (a) und (b) in entsprechende abgesenkte Dichtungsbereiche des korrespondierenden Kupplungsverschlusses und erhabene Dichtungsbereiche dieses korrespondierenden Kupplungsverschlusses greifen in die entsprechenden abgesenkten Bereiche c) und d) des Kupplungsverschlusses 1 ein, um so eine umlaufende Gesamtdichtung zu erzeugen. An die Schließklappe 4 schließen sich entlang einer Achse einander gegenüberliegende Partialwellenstummel 16 und 18 an. Bei diesen Partialwellenstummeln handelt es sich um Halbachsen, deren der Verschlußseite zugewandte Seite abgeflacht ist. Die in Halbachsenform vorliegenden Partialwellenstummel 16 und 18 verfügen jeweils über ein Eingriffelement 62 bzw. 64 in Form einer Nut, in die ein entsprechender Fortsatz bzw. Dorn einer Antriebswelle eingeführt werden kann. Ferner liegt die Lagerschale 20 bzw. 22 für die Partialwellenstummel in Form eines separaten Einsatzes 86 in dem Rohrstutzen 2 vor. Das Lagerschalenmaterial ist vorzugsweise aus einem abriebsfesten Kunststoff gefertigt, vorzugsweise PEK bzw. PEEK. Des weitere liegen auf der Seitenwandung des Rohrstutzens 2 in gegenüberliegender Position Vorsprünge 30 und 31 vor, die zur besseren Verriegelung einer aus zwei erfindungsgemäßen Kupplungsverschlüssen gebildeten Andockeinrichtung dienen und auf die nachfolgend noch detailliert eingegangen wird. Der abgeflachte Bereich der Partialwellenstummel 16 und 18 liegt im verschlossenen Zustand im wesentlichen in einer Ebene, d.h. fluchtend mit der Außenseite 8 der Schließklappe 4 vor. Die Partialwellenstummel 16 und 18 sind in Lagerschalen 20 und 22, die in dem Rohrstutzen 2 eingelassen sind, schwenkbar gelagert. Der Verschlußseite 27 des Kupplungsverschlusses 1 liegt deren Geräte- bzw. Behälterseite 28 gegenüber. Der Rohrstutzen 2 ist beim Umfüllvorgang demgemäß an seiner Geräte- bzw. Behälterseite mit einem entsprechenden Behältnis bzw. Fördermittel, beispielsweise einem Schlauch oder Rohr, umweltdicht verbunden. Details der Geräte- bzw. Behälterseite des Kupplungsverschlusses 1 sind der Figur 2 zu entnehmen. Die Rohrstutzendichtung 6 deckt hierbei vollumfänglich die Innenseite sowie den der Geräteseite zugewandten Rand des Rohrstutzens 2 ab und erstreckt sich bis zur äußeren Seitenwand des Rohrstutzens. Die kreisförmige Schließklappe 4 liegt mit ihrem Umfangsrand 10 in der Schließstellung bündig in der Dichtung 6 vor. Die Wellenstummel 16, 18 (nicht abgebildet) werden von keilförmigen Aufsätzen 24 und 26, die auf der Geräteseite 28 der Schließklappe 4 einstückig mit dieser vorliegen, aufgenommen. Ferner ist in der Figur 2 eine der zwei in den verschlußseitigen Rand des Rohrstutzens eingelassenen Lagerschalen 20 zu erkennen. In diesen Lagern sind die in Form einer Halbachse vorliegenden Wellenstummel 16, 18 schwenkbar gelagert. Darüber hinaus verfügt der Rohrstutzen 2 auf seiner Außenwandung, vorzugsweise um 90° versetzt zu der durch die sich gegenüberliegenden Wellenstummel 16, 18 gebildeten Schwenkachse, über einen Fortsätze 30 und 31 (nicht abgebildet) in Form eines Halbkreises zur Kraftbeaufschlagung. Darüber hinaus liegen im Bereich der Lagerschalen auf der Außenwandung des Rohrstutzens 2 Anschläge 40 und 42 vor. Diese können einstückig mit dem Einsatz 86 für die Lagerschale ausgebildet sein und haben zweierlei Funktion. Zum einen dient deren Stirnfläche als Anschlag für eine Justierhilfe bzw. ein Gehäuse, z.B. das der Antriebswelle, und zum anderen kann in Wechselwirkung mit einer korrespondierenden Führeinrichtung 36, 38 der Kupplungsverschluß 1 positionsgenau vor die jeweiligen Antriebswellen gebracht werden.

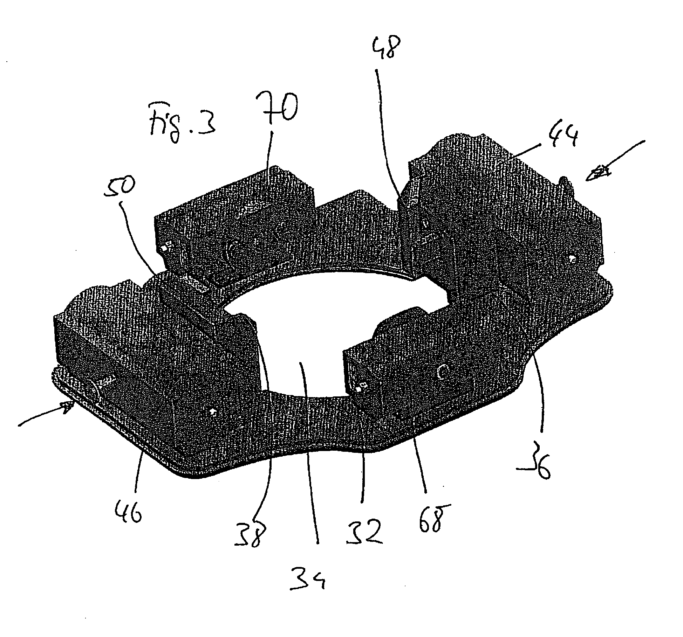

In Figur 3 ist eine Andockplattform 32 gezeigt, die dazu ausgelegt ist, die erfindungsgemäße Andockeinrichtung zwecks Schüttguttransfers von einer Schließstellung in eine geöffnete Stellung zu überführen. Diese Plattform 32 verfügt über eine Durchtrittsöffnung 34, deren Ausmaße im wesentlichen dem Außenumfang des Rohrstutzens 2 der erfindungsgemäßen Kupplungsverschlüsse entsprechen. Zur besseren Handhabung und insbesondere zum leichteren Andocken der erfindungsgemäßen Vorrichtungen liegen auf der Arbeitsplattform 32 an sich gegenüberliegenden Positionen Führeinrichtung 36 und 38 vor. In diese Führeinrichtung 36 und 38 lassen sich entsprechende Anschläge 40 und 42 (nicht abgebildet), die an den Außenseiten der Rohrstutzen 2 vorliegen, einführen, so daß die Wellenstummel 16, 18 ohne weiteres korrekt positionierbar sind. Auf der Arbeitsplatte 32 liegen ferner an sich gegenüberliegenden Positionen Antriebe 44 und 46 sowie Wellenlager 48 und 50 vor. Des weiteren sind auf der Arbeitsplattform 32 an den sich gegenüberliegenden Positionen Verrieglungseinheiten 68 und 70 angebracht. Diese Einheiten haben den Zweck, aneinander zur Anlage gebrachte, eine erfindungsgemäße Andockeinrichtung bildende Kupplungsverschlüsse während des Schüttguttransfervorgangs gegeneinander zu verriegeln. Deren genaue Funktionsweise wird nachfolgend noch detaillierter beschrieben.

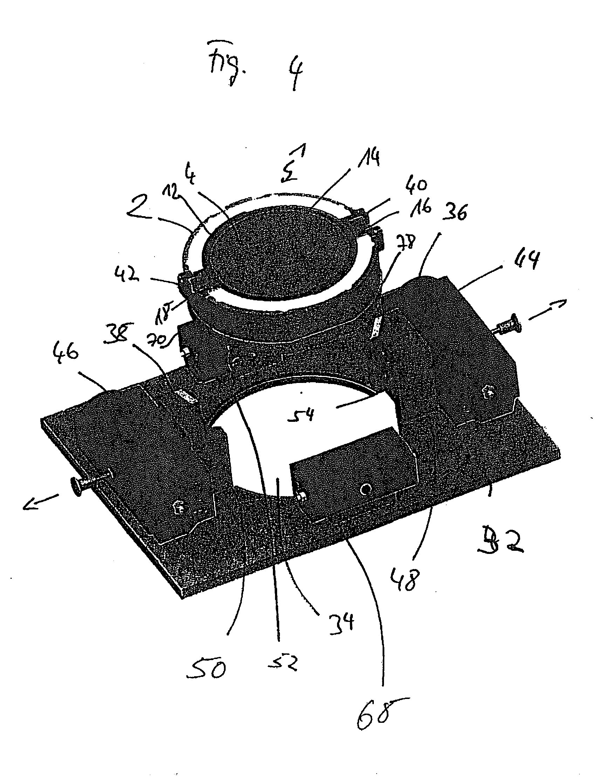

Wie in Figur 4 abgebildet, kann ein erster Kupplungsverschluß 1 über die Führeinrichtungen 36 und 38 in die Öffnung 34 der Arbeitsplattform 32 eingesetzt werden. Die Durchtrittsöffnung 34 kann dabei derart dimensioniert und konstruiert sein, daß sie über einen Auflagerand 52 verfügt, auf dem der erste Kupplungsverschluß 1 behälterseitig aufsetzen kann. Die Wellenstummel 16 und 18 liegen dann automatisch in der richtigen Höhe vor den Antriebswellen 54 und 56 (nicht abgebildet) vor. Darüber hinaus ist die Andockplattform 32 mit zwei gegenüberliegend angebrachten Verriegelungseinheiten 68 und 70 ausgestattet, auf deren Funktionsweise im folgenden noch im Detail eingegangen werden wird.

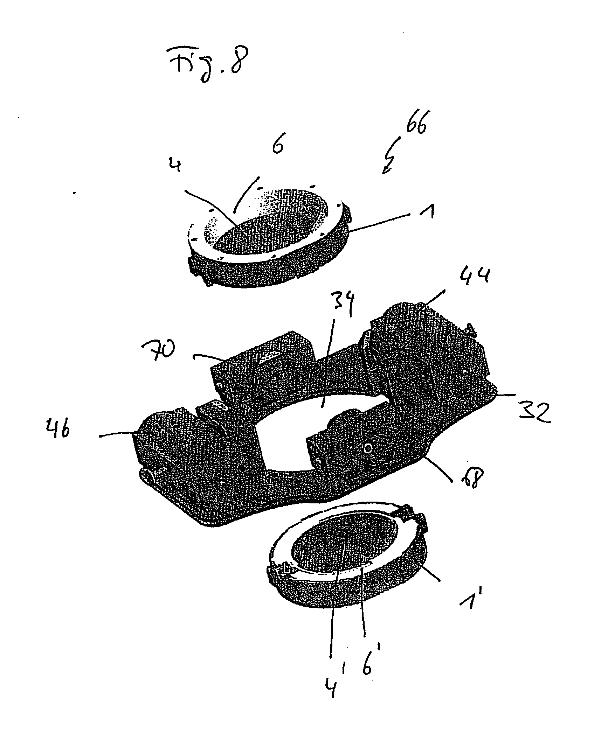

Um ein und denselben Kupplungsverschluß sowohl von oben, wie in Fig. 4 dargestellt, als auch von unten, wie in Fig. 8 angedeutet, in die Durchgangsöffnung 34 einführen zu können, ist für den Fall der Einführung von oben gemäß Fig. 4 an den Rohrstutzen 2 behälterseitig ein umlaufender Auflageüberstand 78 angebracht, der über die Außenabmessungen des Rohrstutzens 2 hinausragt. Dieser Auflageüberstand 78 ist folglich derart dimensioniert, daß er auf dem Auflagerand 52 der Durchgangsöffnung 34 zur Auflage kommt. Die Dicke dieses Auflageüberstands 78 ist zudem so bemessen, daß die Wellenstummel 16 und 18 auf der Höhe der Antriebswellen 54 und 56 positioniert sind. Wenn, wie im vorliegenden Fall, die Eingriffselemente 62 und 64 in Form einer Nut vorliegen, die nicht komplett durchgehend ist, haben die Antriebswellen mit den komplementären Eingriffselementen der Antriebswellen, wie in Fig. 4 dargestellt, eingefahren vorzuliegen. Hingegen sind in der Fig. 3 die komplementären Eingriffselemente 58 und 60 im ausgefahrenen Zustand, in dem sie in die Eingriffselemente der Wellenstummel eingreifen, gezeigt.

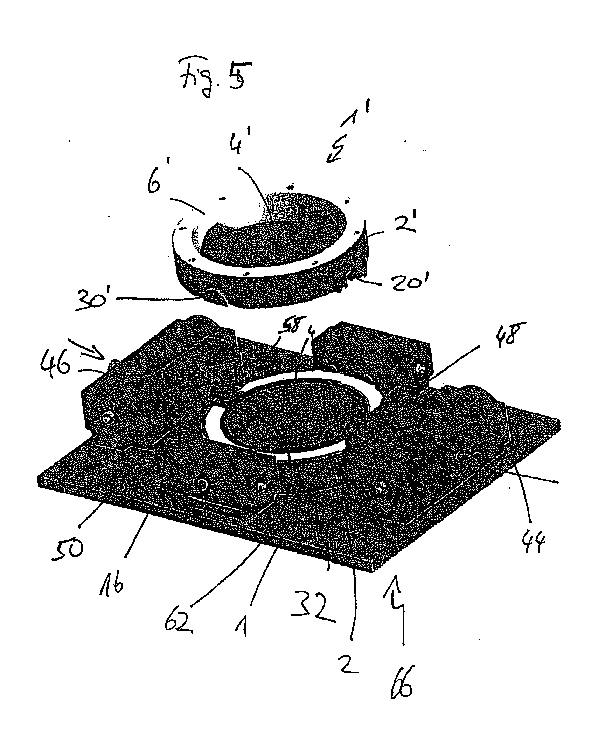

Figur 5 zeigt den in die Andockplattform 32 eingesetzten ersten Kupplungsverschluß 1, wobei die komplementären Eingriffselemente 58 und 60 (nicht abgebildet) der Antriebswelle, die in Form eines Doms vorliegen, bereits in das in Form einer nach oben offenen Nut vorliegende Eingriffselement 62 des Partialwellenstummels 16 axial eingeschoben worden ist. Die komplementären Eingriffselemente 58 und 60 können in diesem Zustand für den anzukuppelnden zweiten Kupplungsverschluß 1' auch als Zentriervorrichtungen dienen.

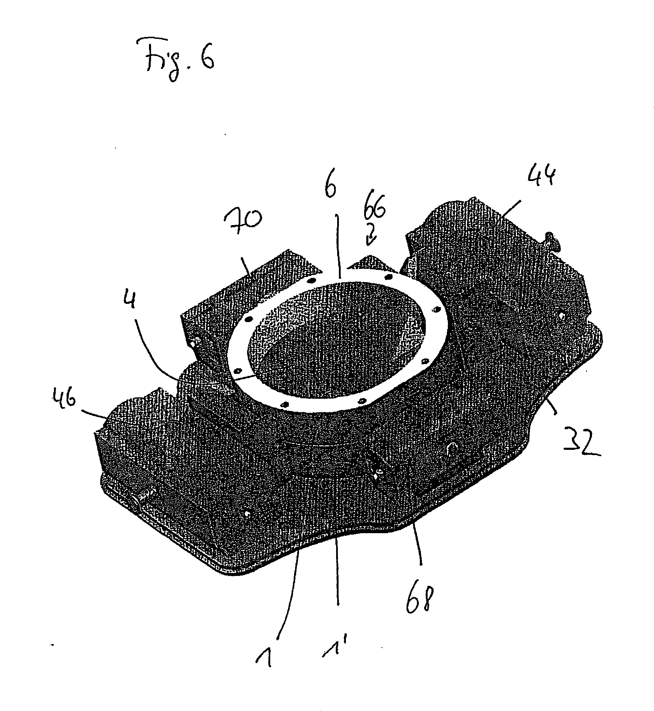

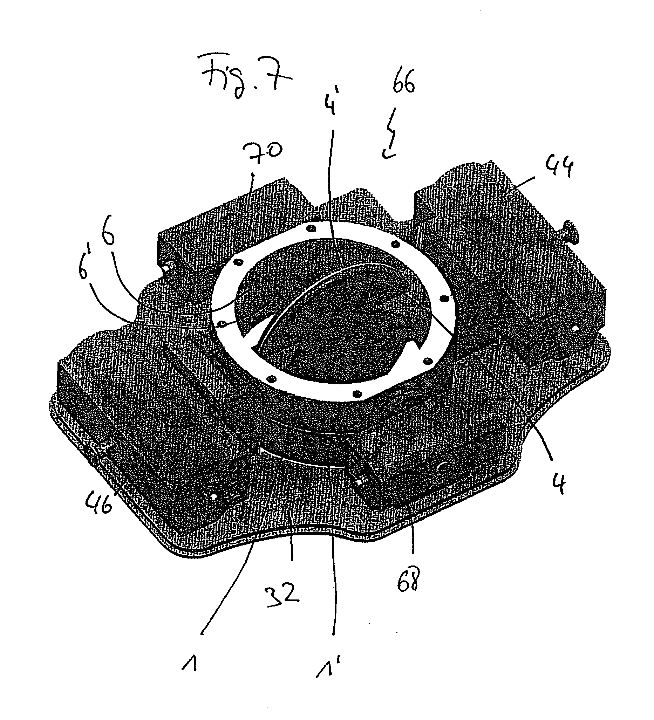

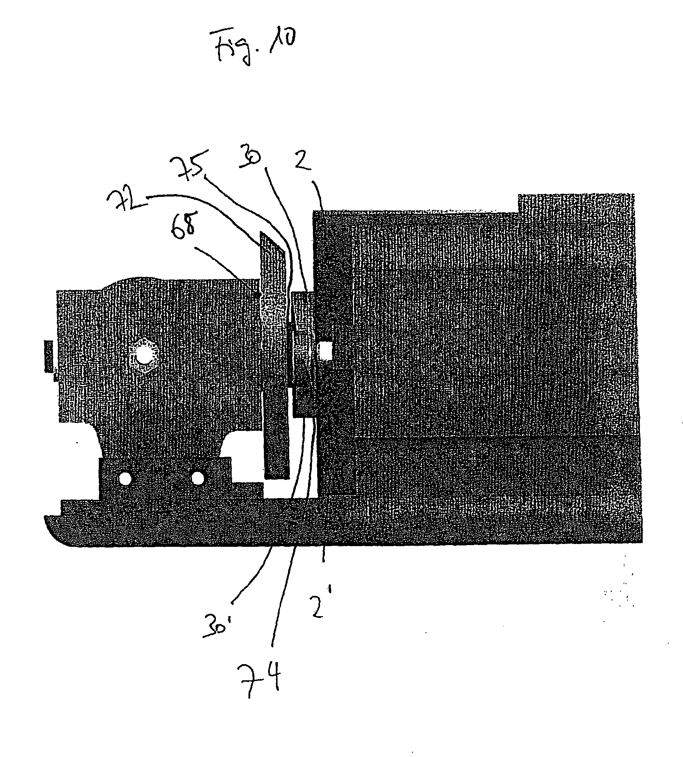

In Figur 6 ist die auf der Andockplattform 32 vorliegende gekuppelte Andockeinrichtung 66 abgebildet. Beide Kupplungsverschlüsse 1 und 1' liegen über ihre Verschlußseiten bündig aneinander an. Die Eingriffselemente der aneinander liegenden Partialwellenstummel bilden ein einheitliches Eingriffselement 80 (nicht abgebildet) in Form einer nach oben und unten begrenzten Nut, in die das in Form eines abgeflachten Doms vorliegende komplementäre Eingriffselemente 58 der Antriebswelle eingreift. Dieses trifft auf beide sich gegenüberliegenden Gesamtwellenstummel 82 und 84 (nicht abgebildet) zu. Demgemäß können die aneinander anliegenden Schließklappen 4 und 4' (nicht abgebildet) durch gleichzeitige Betätigung der zwei Antriebe 44 und 46 um ihre gemeinsame Achse in eine Öffnungsstellung, wie in Figur 7 gezeigt, geschwenkt werden. Die komplementären Eingriffselemente 58 und 60 lassen sich, wie durch die Pfeile in den Figuren 3 bis 6 angedeutet, auch manuell in die Eingriffsposition sowie auch wieder aus dieser Eingriffsposition in eine freigegebene Position bringen. Die Verriegelungseinheiten 68 und 70, liegen auf der Andockplattform auf einer Achse vor, die senkrecht zur Drehachse ist. Mit diesen Vorrichtungen werden die Kupplungsverschlüsse 1 und 1' im gekoppelten Zustand gegeneinander arretiert bzw. gegeneinander gepreßt. Dieser Vorgang ist beispielhaft den Figuren 10 bis 13 zu entnehmen.

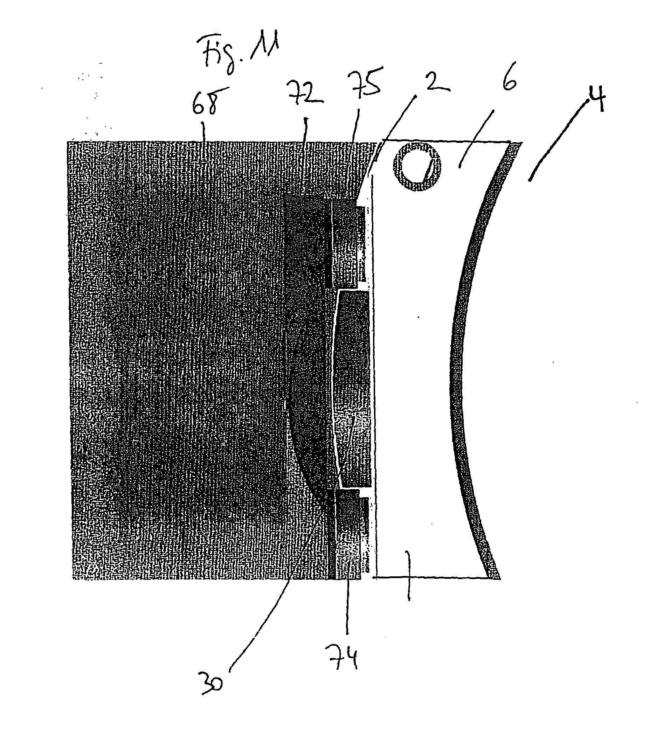

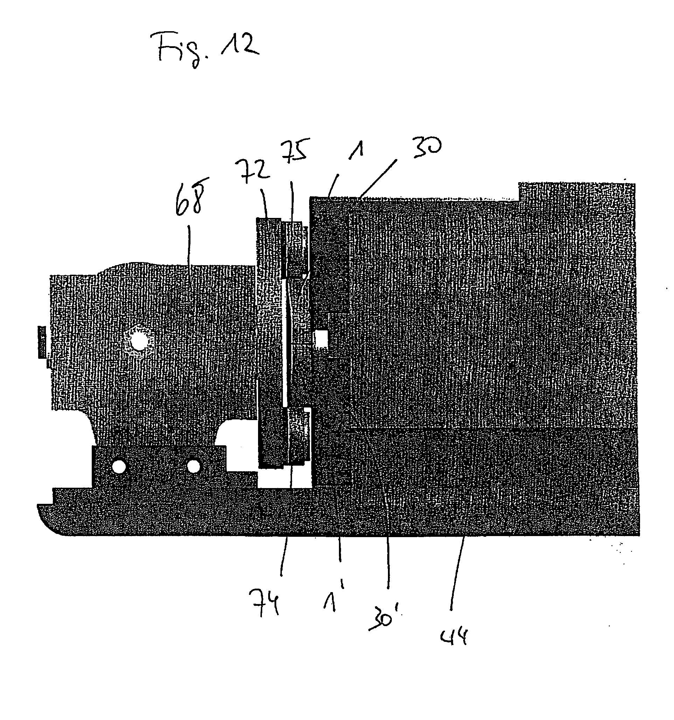

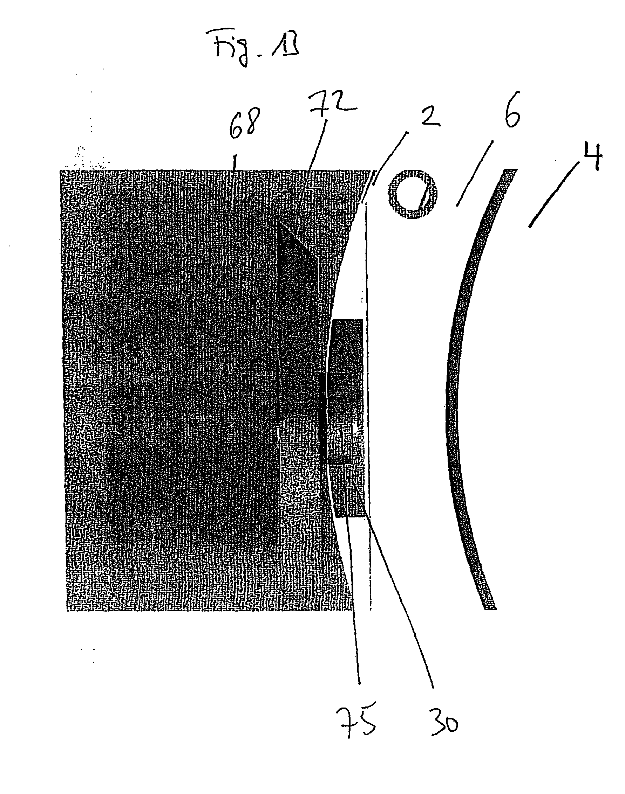

Wie in Fig. 10 gezeigt, liegen auf den Außenseiten der Rohrstutzen 2 und 2' Vorsprünge 30 bzw. 30' vor. Diese Vorsprünge können aus behälterseitiger Richtung mit Kraft beaufschlagt werden. Hierfür eignet sich beispielsweise die in Figur 10 wiedergegebene, drehbar gelagerte Vorrichtung 72 in Form einer Scheibe, die Bestandteil der Verriegelungseinheit 68 ist. Wie aus Fig. 11 zu ersehen, ist der Abstand der an gegenüberliegenden Seiten der Scheibe 72 vorliegenden Rollen 74 und 75 so bemessen, daß bei Drehung der Scheibe um 90° auf die Vorsprünge 30 und 30' eine Kraft wirkt, so daß die Rohrstutzen 2 und 2' bzw. deren Dichtungen gegeneinander gepreßt werden (s.a. Fig. 12). Die Vorsprünge 30 und 30' sind gewölbt. Deren Außenumfänge liegen im verriegeltem Zustand im wesentlichen zumindest abschnittsweise auf einem gemeinsamen Kreisumfang. Im nicht-verriegelten Zustand bilden die Vorsprünge 30 und 30' aufgrund der Dichtungen 12 und 12' von aneinander anliegenden Kupplungsverschlüssen 1 und 1' ein exzentrisches System. Indem man den Abstand der Rollen 74 und 75 derart einstellt, daß dieser im wesentlichen dem Durchmesser des genannten Kreisumfangs entspricht, gelingt über die durch die Dichtungen voneinander entfernten Vorsprünge 30 und 30' eine Kraftbeaufschlagung aus gegenläufigen Richtungen bei Rotation der Scheibe 72 um die zentrale Drehachse aus einer Öffnungsposition, in der die Rollen 74 und 75 auf einer Linie vorliegen, die im wesentlichen parallel zur Außenseite der aneinander liegenden Schließklappen ist, in eine Verriegelungsposition, in der diese Linie um 90° gedreht ist. Zweckmäßigerweise verfügen die Vorsprünge 30 und 30' sowie 31 und 31' (nicht abgebildet) über Aussparungen an ihren gegenüberliegenden Seitenrändern, sodaß die Kupplungsverschlüsse ohne weiteres in die Verriegelungseinheit 68 eingeführt werden können. Der Verriegelungszustand der Verriegelungseinheit 68 wird besonders anschaulich, wenn man die Abbildungen der Figuren 12 und 13 nebeneinander legt. Während Figur 12 die Seitenansicht liefert, zeigt Figur 13 eine schematische Draufsicht. Durch die Feinabstimmung der Abstände der Rollen 74 und 75 auf das Ausmaß des Hervorstehens der Dichtung 12 über die Außenseiten der Schließklappen kann im Verriegelungszustand eine besonders dichte Andockeinrichtung erhalten werden. Es kann auf diese Weise sichergestellt werden, daß kein Schüttgutmaterial die Umwelt kontaminiert bzw. Schüttgut durch Umwelteinflüsse beim Transfervorgang kontaminiert wird. In diesem Zustand kann sodann über die Antriebe 44 und 46 die Andockeinrichtung geöffnet werden, wie in Figur 7 dargestellt.

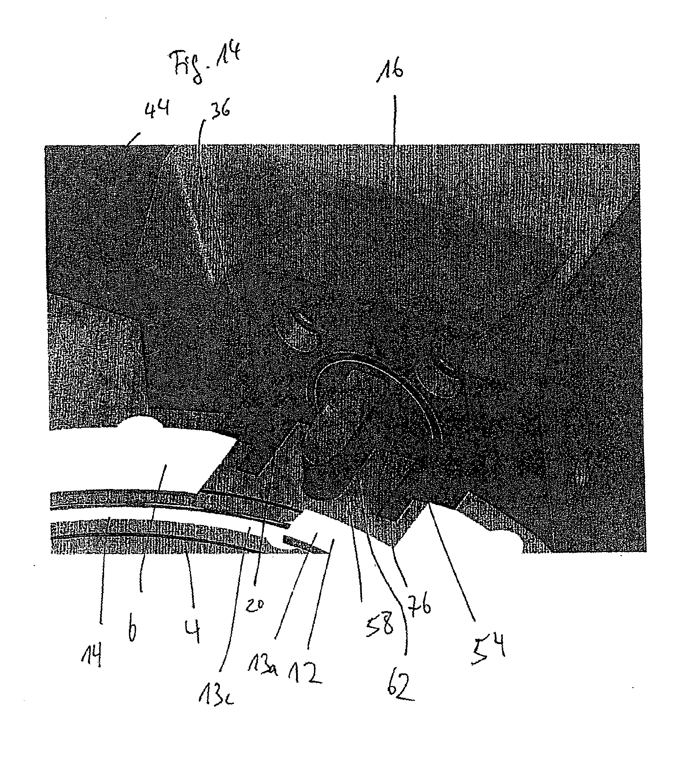

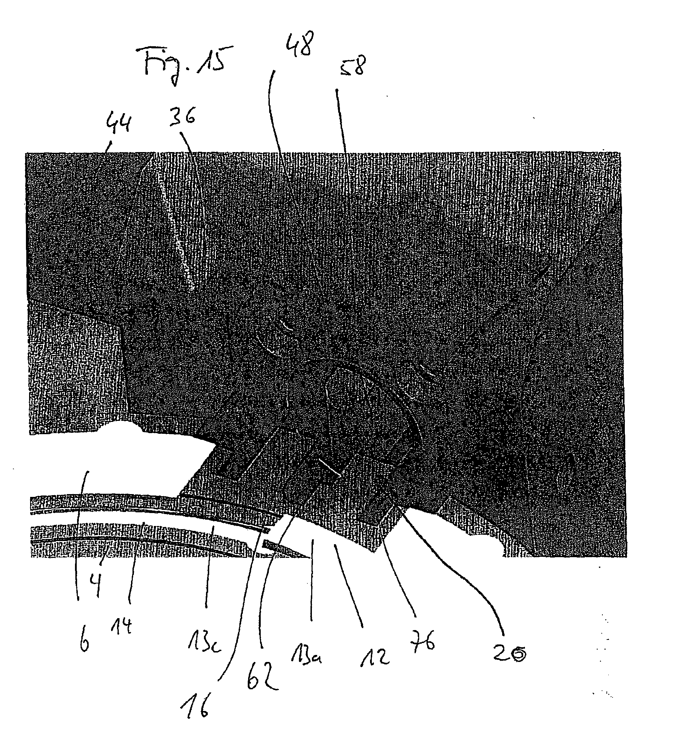

Um die Kupplungsverschlüsse voneinander zu trennen, sind zunächst die Verriegelungseinheiten 68 und 70 wieder freizugeben. Anschließend kann der oben aufliegende Kupplungsverschluß entfernt werden. Bewegt man dann die Antriebswellen 54, 56 entlang der Drehachse weg von den Wellenstummeln 16, 18, wird auch der zweite Kupplungsverschluß zur Entnahme aus der Andockplattform freigegeben (s.a. Fig. 14 und 15). Denn die korrespondierenden Eingriffselemente befinden sich nicht mehr in Kontakt miteinander, so daß auch der in die Durchgangsöffnung 34 eingesetzte Kupplungsverschluß von der Arbeitsplattform 32 zu entfernen ist. Die Figuren 14 und 15 zeigen ferner ein Führungs- und Halteelement 76. Hierin ist der Wellenstummel gelagert. Durch das Ineinandergreifen von Nut- und Federelementen wird der Wellenstummel stets einwandfrei und zuverlässig bei der Rotation geführt. Außerdem sorgt die Vorrichtung 76 dafür, daß der Wellenstummel 16 sicher in der Lagerschale 20 gehalten wird. Durch geeignete Wahl der Materialien kann sogar vollständig auf Schmiermittel verzichtet werden.

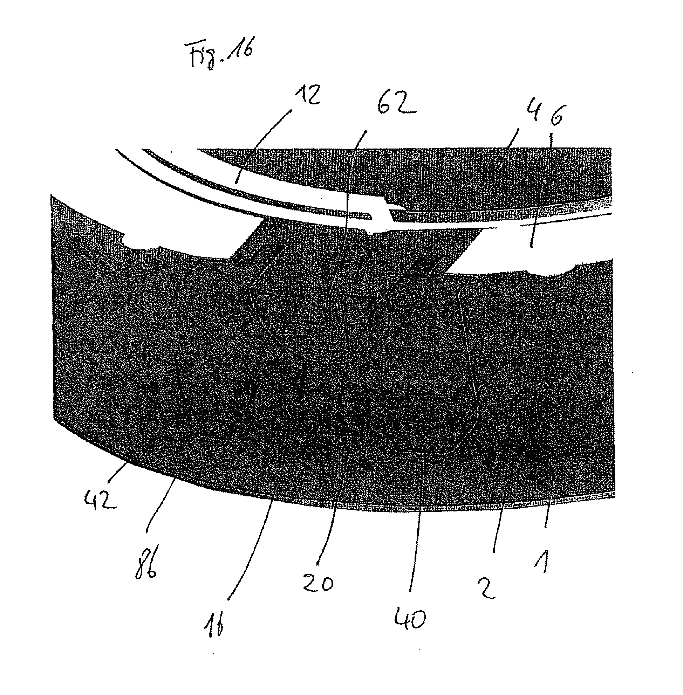

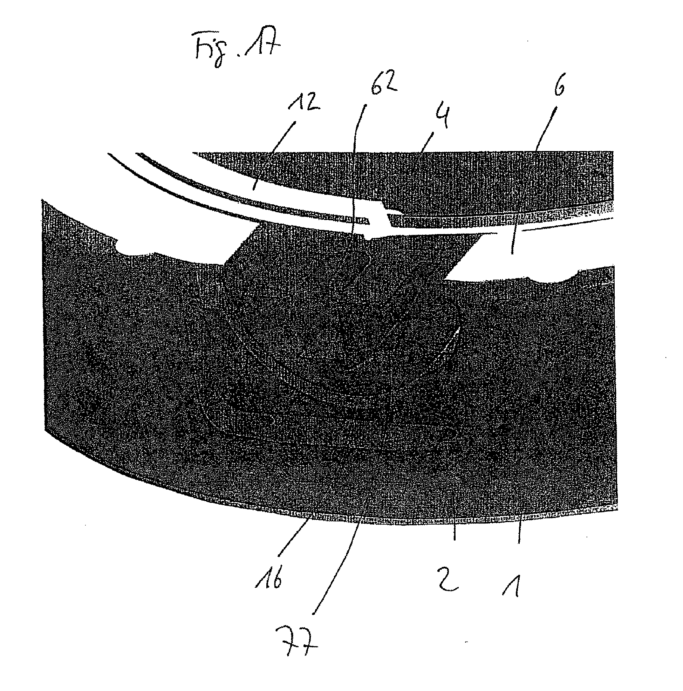

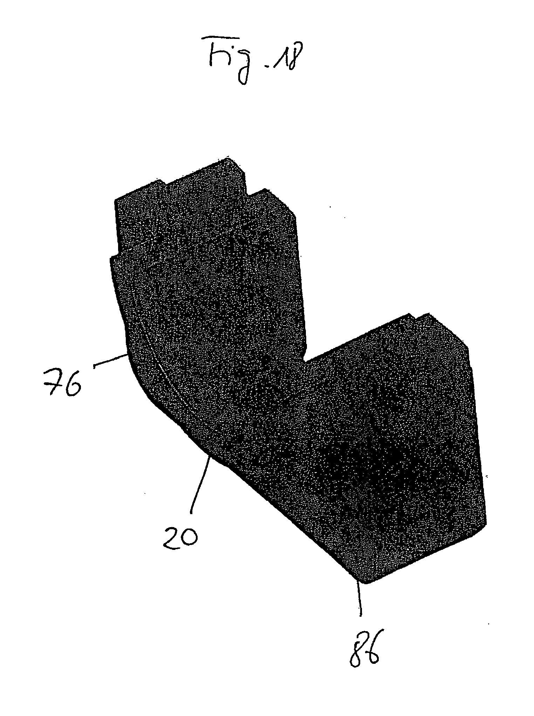

Aus Figur 16 geht nochmals ausdrücklich der separate Einsatz 86 für das Lager bzw. die Lagerschale 20 hervor. Dieser Einsatz wird in eine entsprechende Auslassung des Rohrstutzens 2, wie in Figur 17 gezeigt, eingelassen. Der Partialwellenstummel 16 liegt mit seiner abgerundeten Seite somit vollständig und ausschließlich auf der Lagerschale 20 dieses Einsatzes 86 auf. Die Lagerschale 20 ist hierbei zusätzlich als Führungselement 76 gearbeitet bzw. umfaßt ein solches Führungselement. Dieses Führungselement 76, das in der dargestellten Ausführungsform (s.a. Figur 18) eine Verlängerung der Lagerschale 20 darstellt, greift ein eine entsprechende Einbuchtung 77 in Form einer Feder/Nut-Wechselwirkung ein (s.a. Figur 17). Auf diese Weise gelingt eine äußerst zuverlässige und sichere Lagerung von Wellenstummel bzw. der hiermit verbundenen Schließklappe 4. Das Führungselement 76 sorgt somit als Bestandteil des Einsatzes 86 für einen sicheren Halt der Partialwelle und verhindert ein Verrutschen in axialer Richtung ebenso wie ein Herausfallen der Schließklappe aus dem Rohrstutzen.

Durch die Verwendung einer Arbeitsplattform, auf der die Antriebe bereits fest fixiert vorliegen, gelingt dauerhaft ein fehlerfreies Andocken zweier Kupplungsverschlüsse. Von besonderem Vorteil ist ferner, daß die erfindungsgemäße Andockeinrichtung mit baugleichen Kupplungsverschlüssen erhalten wird. Zudem liegt die erfindungsgemäße Andockeinrichtung auf der Arbeitsplattform bewegungsinvariant vor.

Von besonderem Vorteil bei der erfindungsgemäßen Andockeinrichtung ist schließlich die Ausbildung eines einheitlichen Eingriffelements 80, das aus den in den Partialwellenstummeln vorliegenden Eingriffselementen 62, 64 gebildet wird. Denn auf diese Weise können über das Einführen eines mit diesem einheitlichen Eingriffselement 80 korrespondierenden Eingriffselements der Antriebswelle beim Verschwenken der über ihre Außenseiten aneinander anliegenden Schließklappen beide Schließklappen gleichzeitig und gleichmäßig mit einem Drehmoment beaufschlagt werden. Anders als bei herkömmlichen Andockeinrichtungen bestehend aus Aktiv- und Passivklappe kann somit eine Spaltbildung aufgrund einseitiger Drehmomentbeaufschlagung vermieden werden. Demgemäß wird bei den erfindungsgemäßen Andockeinrichtungen beim Rotationsvorgang auf die Außenseiten der aneinander anliegenden Schließklappen sehr gleichmäßig Kraft ausgeübt. Ein weiterer Vorteil der gleichzeitigen Drehmomentbeaufschlagung beider Schließklappen beim Drehvorgang ist darin zu erblicken, daß die Antriebe, insbesondere wenn die Wellen an beiden Achsseiten angetrieben werden, kleiner ausgeführt werden können als bei konventionellen Andockeinrichtungen. Dieses ermöglicht ein geringeres Bauvolumen und damit eine bessere Einpassung in bestehende Umfüllanlagen beim Nutzer. Außerdem läßt sich auf diese Weise besonders gut die Arbeits- bzw.

Andockplattform symmetrisch auslegen, was sich insbesondere bei elastischer Lagerung der Arbeitsplattform positiv bemerkbar macht.

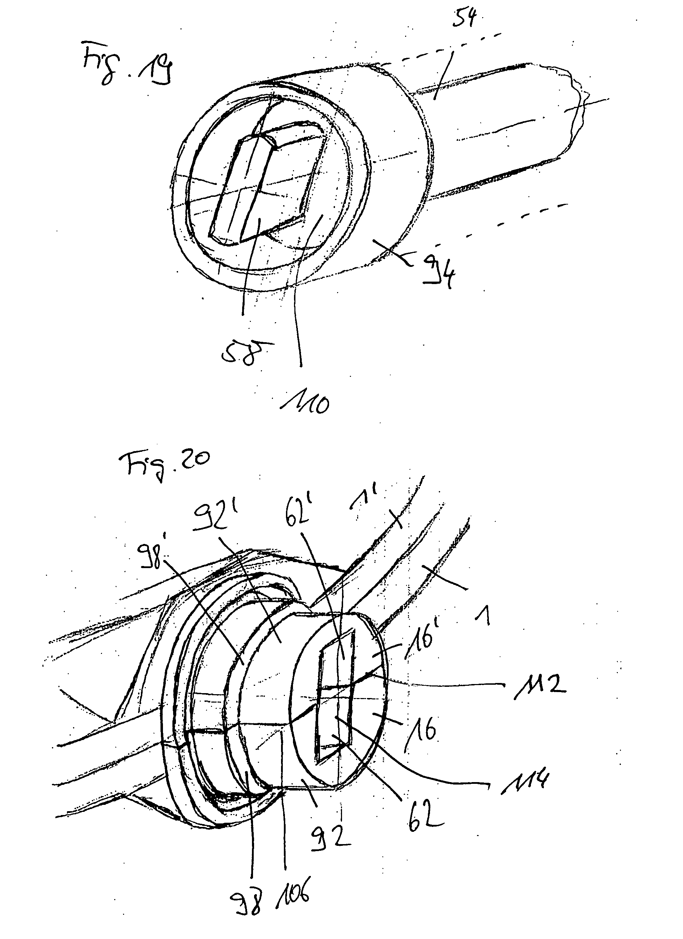

Figur 19 zeigt die Stirnflächenansicht einer Antriebswelle 54 mit einem an der Stirnseite 110 in Form eines im wesentlichen als quaderförmiger Fortsatz vorliegenden komplementären Eingriffselements 58. Im Unterschied zu den vorherigen Ausführungsformen verfügt die Antriebswelle 54 im stirnseitigen Bereich zusätzlich als zweites Arretierelement über einen zylinderförmigen Aufsatz 94, der das komplementäre Eingriffselement 58 umgibt. Selbstverständlich kann die Antriebswelle 54 auch bereits selber über einen Durchmesser verfügen, der dem Durchmesser des zylinderförmigen Aufsatzes 94 entspricht, so daß beispielsweise Antriebswelle und zylinderförmiger Aufsatz als Einheit vorliegen (durch gestrichelte Linie angedeutet). Dem Fachmann sind geeignete Verfahren bekannt, um jegliche Ausgestaltung einer solchen Antriebswelle, enthaltend einen zylinderförmigen Aufsatz 94, in dem ein komplementäres Eingriffselement vorliegt, herzustellen. Wie bereits vorangehend erläutert, dient das komplementäre Eingriffselement 58 dazu, in die Eingriffselemente 62, 64 von erstem und zweitem Kupplungsverschluß eingeschoben werden zu können, damit die Drehbewegung der Antriebswelle 54 auf die aneinander anliegenden Schließklappen der ersten und zweiten Kupplungsverschlüsse übertragen werden kann.

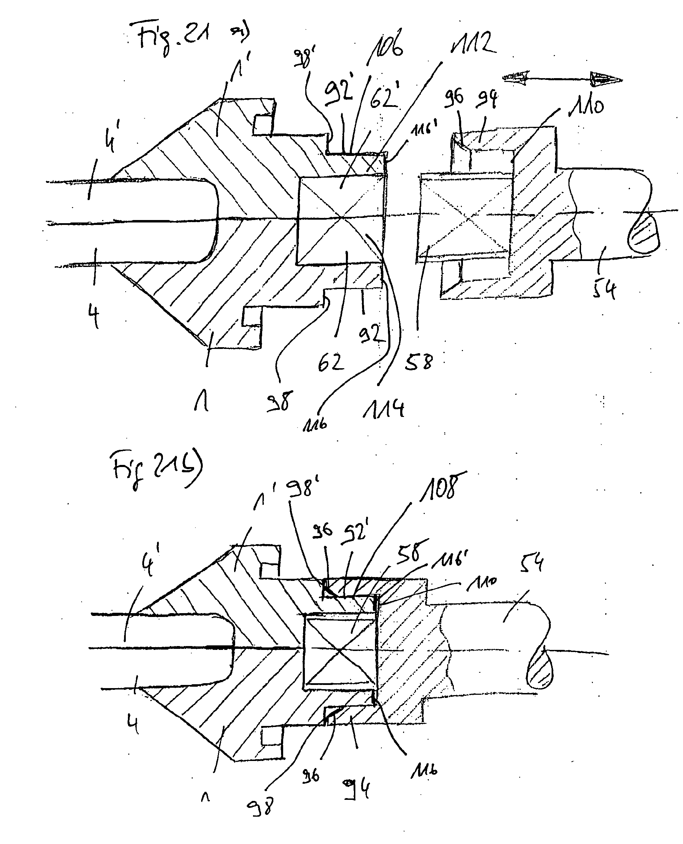

Dementsprechend zeigt Figur 20 ausschnittsweise aneinander zur Anlage gebrachte erste und zweite Kupplungsverschlüsse 1 und 1' mit ebenfalls zur Anlage gebrachten korrespondierenden Partialwellenstummeln 16 und 16', die gemeinsam einen (Gesamt)-Wellenstummel 112 ausbilden. Die in Form von Nuten in diesen Partialwellenstummeln vorliegenden Eingriffselemente 62 und 62' bilden bei Anlage von erstem und zweitem Kupplungsverschluß eine durchgehende Nut in Form eines Gesamteingriffselements 114 aus, in die das dazu komplementäre Eingriffselement 58 der Antriebswelle 54 bei axialer Bewegung eingreifen kann. Die Partialwellenstummel 16 und 16' verfügen auf ihrer radialen Außenseite jeweils über eine Kontakt- bzw. Anschlagsfläche 92 bzw. 92'. In der dargestellten Ausführungsform bilden diese radialen Kontaktflächen 92 und 92', die Partialarretierelemente darstellen, ein erstes Arretierelement 106 in Form einer zylinderförmigen, umhüllenden Fläche aus. Diese Kontaktflächen sind derart geformt und dimensioniert, daß bei axialer Relativbewegung von Antriebswelle 54 und Wellenstummel 112 nicht nur das komplementäre, in Form eines Doms vorliegende Eingriffselement 58 in die Nut 114 eingreift, sondern ebenfalls der zylinderförmige Aufsatz 94 der Antriebswelle sich als zweites Arretierelement über die radialen Kontaktflächen 92, 92' unter Ausbildung einer Arretiereinheit 108 (s.a. Fig. 21 a) und b)) schiebt. Hierbei hat es sich als vorteilhaft erwiesen, daß der Innendurchmesser des zylinderförmigen Aufsatzes 94 und der Außendurchmesser der Kontaktflächen 92, 92' bzw. des ersten Arretierelements 106 eng aufeinander abgestimmt sind, so daß zwar eine axial Relativbewegung ohne weiteres möglich ist, jedoch eine Bewegung in radialer Richtung nicht zugelassen bzw. verhindert wird. Auf diese Weise werden die ersten und zweiten Kupplungsverschlüsse gegeneinander arretiert und können zwangsläufig bei Drehmomentbeaufschlagung über die Antriebswelle nicht mehr voneinander getrennt werden. Diese Ausgestaltung der erfindungsgemäßen Andockeinrichtung 66 macht zusätzliche, externe Verriegelungs- bzw. Arretiervorrichtungen überflüssig und gewährleistet gleichwohl ein sehr hohes Maß an Betriebssicherheit.

Die Figuren 21a) und 21b) veranschaulichen in schematischer Querschnittsansicht das axiale Eingreifen des komplementären Eingriffselements 58 der Antriebswelle gemäß Fig. 19 in das durch die Nuten 62 und 62' gebildete Gesamteingriffselement 114 des Gesamtwellenstummels 112 der angedockten Kupplungsverschlüsse 1, 1' gemäß Fig. 20. Der zylinderförmige Aufsatz bzw. die zylinderförmige Hülse 94 ist hierbei auf die äußeren radialen Kontakt- bzw. Anschlagsflächen 92, 92' derart abgestimmt, daß ein passgenaues Eingreifen bei axialer Bewegung gelingt. Die Hülse 94 läßt sich auf den Wellenstummel 112 aufschieben. Liegt die Antriebswelle 54 in Eingriff mit dem Gesamt-Wellenstummel 112 vor, können die Kupplungsverschlüsse 1 und 1' nicht mehr voneinander getrennt werden. Um das Einführen des GesamtWellenstummels 114 unproblematisch zu gestalten, ist der Rand 96 der zylinderförmigen Hülse innenseitig umlaufend angeschrägt ausgestaltet. Zweckmäßigerweise verfügen die Partialwellenstummel 16 und 16' jeweils über Anschläge 98, 98', die die Axialbewegung der Antriebswelle beim Eingriffsvorgang stoppen. Auf diese Weise kann verhindert werden, daß die Stirnflächen 116, 116' der Partialwellenstummel unmittelbar an der Stirnflächen 110 der Antriebswelle 54 anliegt, und ebenfalls, daß die Stirnfläche des komplementären Eingriffselements 58 an der Stirnfläche des Eingriffselements 62, 62' anschlägt.

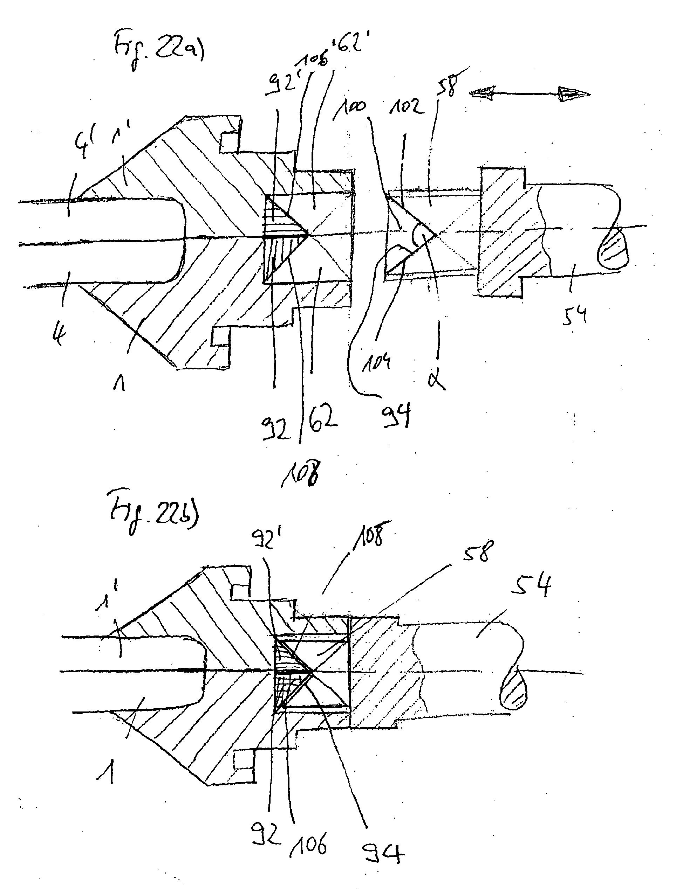

Die Figuren 22a) und 22b) zeigen in schematischer Querschnittsansicht eine alternative Möglichkeit zur gegenseitigen Arretierung von erstem und zweitem Kupplungsverschluß 1, 1' durch Wechselwirkung des komplementären Eingriffselements 58 der Antriebswelle 54 mit den Partialarretierelementen 92 und 92' der Eingriffselemente 62 und 62' von erstem und zweitem Kupplungsverschluß. Bei dieser Ausgestaltung ist die Stirnfläche des komplementären Eingriffselements 58 mit einer Einbuchtung 100 versehen, welche durch eine erste Kontaktfläche 102 und eine zweite Kontaktfläche 104 begrenzt ist. Diese Kontaktflächen bilden das zweite Arretierelement 94 aus. Die ersten und zweiten Kontaktflächen 102, 104 sind einander zugewandt und stehen in einem Winkel α zueinander. Die Eingriffselemente 62 und 62' vom ersten und zweiten Kupplungsverschluß 1 bzw. 1' sind jeweils ebenfalls mit einem Partialarretierelement 92 bzw. 92' ausgestattet und bilden gemeinsam das erste Arretierelement 106 in Form eines Keils aus. Das Partialarretierelement 92 verfügt über eine geneigte Kontaktfläche 108, die bei axialer Bewegung der Antriebswelle 54 in Berührung mit der Kontaktfläche 104 des komplementären Eingriffselements 58 treten kann, während in gleicher Weise das Partialarretierelement 92' über eine spiegelbildlich geneigte Kontaktfläche 106' verfügt, welche bei dieser Axialbewegung in Berührung mit der ersten Kontaktfläche 102 des komplementären Eingriffselements 58 treten kann. Durch die bei der Axialbewegung über die Kontaktflächen 102 und 104 auf die Arretierelemente 92 und 92' bzw. deren Kontaktflächen ausgeübten Kräfte werden der erste und zweite Kupplungsverschluß unter Ausbildung einer Arretiereinheit 108 gegeneinander gedrückt bzw. gegeneinander arretiert (s.a. Fig. 22 b)). Hierbei ist es von besonderem Vorteil, wenn die Partialarretierelemente 92 und 92' bzw. das erste Arretierelement 106 und die Einbuchtung 100 bzw. die erste und zweite Kontaktfläche 102 und 104 bzw. das zweite Arretierelement 94 derart dimensioniert und aufeinander abgestimmt sind, daß weder der umlaufende Rand der Einbuchtung 100, noch der am weitesten in die Einbuchtung 100 hineinragende Bereich der Arretierelemente 92 und 92' die Axialbewegung beim Ineinandergreifen begrenzen, sondern daß dieses allein über die Berührung der ersten und zweiten Kontaktflächen 102 und 104 mit den entsprechenden Kontaktflächen der Partialarretierelemente 92 und 92' geschieht. Auf die vorangehend anhand der Figuren 22a) und b) geschilderte Weise ist es ebenfalls möglich, die ersten und zweiten Kupplungsverschlüsse gegeneinander zu pressen bzw. zu arretieren und beim Drehvorgang der Schließklappen auch arretiert bzw. gegeneinander gepreßt zu halten, ohne daß es externer, zusätzlicher Verriegelungselemente bedarf. Selbstverständlich ist es ebenfalls möglich, die in den Figuren 21 und 22 dargestellten und vorangehend geschilderten Ausführungsformen einander komplementärer Arretierelemente zu kombinieren. Auf diese Weise würden über die gleichzeitige Ausbildung zweier Arretiereinheiten die Kupplungsverschlüsse der Andockeinrichtung gegeneinander arretiert bzw. gepresst werden.

Der besseren Übersicht halber sind bei sämtlichen dargestellten Kupplungsverschlüssen und Andocksystemen die sich behälterseitig an den Kupplungsverschluß bzw. den Rohrstutzen des Kupplungsverschlusses anschließenden Behälter nicht mit abgebildet worden.

Die in der vorstehenden Beschreibung, in den Ansprüchen sowie in den Zeichnungen offenbarten Merkmale der Erfindung können sowohl einzeln als auch in jeder beliebigen Kombination für die Verwirklichung der Erfindung in ihren verschiedenen Ausführungsformen wesentlich sein.

### Bezugszeichenliste

- 1: Kupplungsverschluß
- 2: Rohrstutzen
- 4: Schließklappe
- 6: Rohrstutzendichtung
- 8: Außenseite der Schließklappe
- 10: Umfangsrand der Schließklappe
- 12: Dichtung der Schließklappe
- 13 a) und b): Dichtungsabschnitte
- 14: Nut
- 16: Wellenstummel
- 18: Wellenstummel
- 20: Lagerschale
- 22: Lagerschale
- 24: Keilförmiger Aufsatz
- 26: Keilförmiger Aufsatz
- 27: Verschlußseite
- 28: Geräteseite
- 30: Vorsprung auf der Außenseite des Rohrstutzens
- 31: Vorsprung auf der Außenseite des Rohrstutzens
- 32: Andockplattform
- 34: Durchtrittsöffnung
- 36: Einführvorrichtung
- 38: Einführvorrichtung
- 40: Anschlag
- 42: Anschlag
- 44: Antrieb
- 46: Antrieb
- 48: Wellenlager
- 50: Wellenlager
- 52: Auflagerrand
- 54: Antriebswelle
- 56: Antriebswelle
- 58: komplementäres Eingriffselement
- 60: komplementäres Eingriffselement
- 62: Eingriffselement
- 64: Eingriffselement
- 66: Andockeinrichtung
- 68: Verriegelungseinheit
- 70: Verriegelungseinheit
- 72: drehbar gelagerte Vorrichtung
- 74: Rolle
- 75: Rolle
- 76: Führungs- und Halteelement
- 77: Einbuchtung zur Aufnahme des Führungselements
- 78: Auflageüberstand
- 80: einheitliches Eingriffselement
- 82: (Gesamt)Welle aus Partialwellen 16, 16'
- 84: (Gesamt)Welle zur Partialwellen 18, 18'
- 86: Einsatz für Lagerschale
- 88: (Gesamt)Lager aus Lagerschalen 20, 20'
- 90: (Gesamt)Lager aus Lagerschalen 22, 22'
- 92: Partialarretierelement
- 94: zylinderförmiger Aufsatz
- 96: angeschrägter Innenrand des zylinderförmigen Aufsatzes
- 98: Anschlag des Partialwellenstummels für Rand des zylinderförmigen Aufsatzes
- 100: Einbuchtung
- 102: erste Kontaktfläche
- 104: zweite Kontaktfläche
- 106: erstes Arretierelement
- 108: Arretiereinheit
- 110: Stirnfläche der Antriebswelle
- 112: (Gesamt)-Wellenstummel
- 114: Gesamteingriffselement
- 116: Stirnfläche der Partialwellenstummel
- α: Winkel zwischen der ersten und zweiten Kontaktfläche

## Patentansprüche

1. Kupplungsverschluß (1) für eine Andockeinrichtung zum, insbesondere umweltisolierten, Umfüllen, Befüllen und/oder Entleeren von Behältnissen mit einer Verschlußseite und einer Behälterseite, umfassend einen Rohrstutzen (2) und eine darin verschwenkbar um eine Achse gelagerte Schließklappe (4), enthaltend eine der Verschlußseite in der Schließstellung zugewandte Außenseite (8), wobei die Schließklappe an mindestens einer Seite, insbesondere auf beiden Seiten, längs der Achse mit einer Partialwelle oder einem Partialwellenstummel (16, 18) in jeweils zur Verschlußseite hin offenem Lager (20, 22) gelagert ist, wobei die Partialwelle(n) oder -wellenstummel (16, 18) geeignet ist (sind), um bei Anlage mit komplementären Partialwellen bzw. -wellenstummeln eines weiteren Kupplungsverschlusses eine Welle oder einen Wellenstummel auszubilden, wobei die Partialwelle oder der -wellenstummel (16, 18) mit mindestens einem Eingriffselement (62, 64) ausgestattet ist, in das ein komplementäres Eingriffselement, das in Wirkverbindung mit einem Antrieb bringbar ist oder steht, einführbar ist.

2. Kupplungsverschluß (1) nach Anspruch 1, **dadurch gekennzeichnet, daß** die Partialwelle oder der -wellenstummel (16, 18) mit einer Stirnfläche in axialer Richtung ausgestattet ist, in bzw. auf der das Eingriffselement (62) vorliegt, das axial in ein komplementäres Eingriffselement, das in Wirkverbindung mit einem Antrieb bringbar ist oder steht, einführbar ist.

3. Kupplungsverschluß (1) nach Anspruch 1 oder 2, **dadurch gekennzeichnet, daß** die Schließklappe (4) auf ihrer Außenseite (8) mit mindestens einem Dichtungsabschnitt (13a, 13b) oder mindestens einer, insbesondere umlaufenden, Dichtung (12) versehen ist, die zumindest abschnittsweise am oder benachbart zum Umfangsrand (10) angeordnet ist.

4. Kupplungsverschluß (1) nach Anspruch 3, **dadurch gekennzeichnet, daß** die Dichtungsabschnitte (13a, 13b) kreissegmentförmig und/oder rotationssymmetrisch angeordnet sind und/oder die gleiche Länge aufweisen.

5. Kupplungsverschluß nach Anspruch 3 oder 4, **dadurch gekennzeichnet, daß** die Schließklappe (4) auf ihrer Außenseite zwei über diese Außenseite hervorstehende Dichtungsabschnitte (13a, 13b) verfügt, die in der Weise geformt und dimensioniert sind, daß mit einem im wesentlichen identischen Satz an Dichtungsabschnitten eine im wesentlich durchgängig umlaufende Dichtung (12) erhältlich ist.

6. Kupplungsverschluß (1) nach einem der vorangehenden Ansprüche, **dadurch gekennzeichnet, daß**
der Rohrstutzen (2) innenseitig zumindest bereichsweise, insbesondere vollumfänglich, mit einer Rohrstutzendichtung (6) ausgestattet ist.

7. Kupplungsverschluß (1) nach einem der vorangehenden Ansprüche, **dadurch gekennzeichnet, daß**
die Außenseite (8) der Schließklappe (4) in der Schließstellung zumindest abschnittsweise mit dem der Verschlußseite zugewandten Rand des Rohrstutzens (2) oder der Rohrstutzendichtung (6) im wesentlichen fluchtend anordbar oder angeordnet ist.

8. Kupplungsverschluß (1) nach einem der vorangehenden Ansprüche, **dadurch gekennzeichnet, daß**
mindestens eine Partialwelle bzw. ein -wellenstummel (16, 18) auf der der Verschlußseite zugewandten Seite zumindest abschnittsweise Auslassungen zum Eingriff für komplementäre Partialwellen bzw. -wellenstummel aufweist, insbesondere zumindest abschnittsweise in Form einer Halbachse vorliegt.

9. Kupplungsverschluß (1) nach einem der vorangehenden Ansprüche, **dadurch gekennzeichnet, daß**
das/die Lager (20, 22) in Form von Halbschalen ausgebildet ist bzw. sind.

10. Kupplungsverschluß (1) nach einem der vorangehenden Ansprüche, **dadurch gekennzeichnet, daß**
in Schließstellung die Außenseite (8) der Schließklappe (4) und die nicht in dem Lager (20, 22) gelagerte, insbesondere abgeflachte, Seite der Partialwelle bzw. des - wellenstummels (16, 18) zumindest bereichsweise fluchtend anordbar sind.

11. Kupplungsverschluß (1) nach einem der vorangehenden Ansprüche, **dadurch gekennzeichnet, daß**
das Eingriffelement (14) mindestens eine Nut und/oder mindestens einen Vorsprung, insbesondere Dorn, umfaßt.

12. Kupplungsverschluß (1) nach einem der vorangehenden Ansprüche, **gekennzeichnet durch**
einen Behälter oder ein Fördermittel, der bzw. das mit dem Rohrstutzen (2) dichtend verbindbar oder verbunden ist.

13. Kupplungsverschluß (1) nach einem der vorangehenden Ansprüche, **dadurch gekennzeichnet, daß**
das Lager (20, 22), insbesondere ein in dem Rohrstutzen vorliegender Lagerschaleneinsatz (86) enthaltend das Lager, mindestens bereichsweise, insbesondere vollständig, aus mindestens einem Kunststoffmaterial, insbesondere aus Polyamid, Polyetherketon (PEK), Polyetheretherketon (PEEK), Polyetherimid, Polybutylenterephthalat (PBT), Polyketonen, Polyimiden, Polyphenylenether, Polyaryletherketonen, Polyacrylnitril, Polyvinylchlorid, Polyolefinen und/oder Polyoxymethylen, gefertigt ist.

14. Kupplungsverschluß (1) nach einem der vorangehenden Ansprüche, **gekennzeichnet durch** mindestens einen, insbesondere zwei, Anschläge (40, 42) an den Seitenflächen des Rohrstutzens (2) benachbart zu mindestens einem Lager (20, 22).

15. Kupplungsverschluß (1) nach einem der vorangehenden Ansprüche, **dadurch gekennzeichnet, daß**
das Eingriffselement (62, 64) und/oder die Partialwelle oder der -wellenstummel mindestens ein Partialarretierelement (92) geeignet zur Ausbildung eines ersten Arretierelements mit einem Partialarretierelement eines korrespondierenden Kupplungsverschlusses aufweist.

16. Kupplungsverschluß (1) nach Anspruch 15, **dadurch gekennzeichnet, daß**
das Partialarretierelement (92) zumindest abschnittsweise eine der Behälterseite zugewandte, insbesondere in Bezug auf die Drehachse der Schließklappe radiale, Anlagefläche, und/oder in der Stirnseite von Partialwelle oder -wellenstummel eine zumindest abschnittsweise, insbesondere radial umlaufende, Nut oder Feder umfaßt, geeignet zur Anlage bzw. Aufnahme zumindest eines Teils eines korresponderienden zweiten Arretierelements unter Ausbildung einer Arretiereinheit.

17. Kupplungsverschluß (1) nach Anspruch 15 oder 16, **dadurch gekennzeichnet, daß**
das Partialarretierelement (92) Bestandteil des Eingriffselements (62, 64) ist.

18. Andockeinrichtung (66) zum, insbesondere umweltisolierten, Umfüllen, Befüllen und/oder Entleeren von Behältnissen, umfassend über ihre jeweiligen Verschlußseiten aneinander bündig anlegbare oder anliegende erste und zweite Kupplungsverschlüsse (1, 1') gemäß einem der vorangehenden Ansprüche, wobei die Außenseiten (8, 8') der jeweiligen Schließklappen (4, 4') aneinander anliegen oder aneinander zur Anlage bringbar sind und in aneinander angelegtem Zustand aus einer Schließstellung, in der sie den durch den Rohrstutzen (2) des ersten Kupplungsverschlusses (1) und den Rohrstutzen (2') des zweiten Kupplungsverschlusses (1') gebildeten Transferkanal verschließen, um eine gemeinsame Achse in eine Öffnungsstellung schwenkbar sind.

19. Andockeinrichtung (66) nach Anspruch 18, **dadurch gekennzeichnet, daß** zumindest der Rohrstutzen (2, 2'), die Rohrstutzendichtung (6, 6'), die Schließklappe (4, 4') und/oder die Partialwelle bzw. der -wellenstummel (16, 18; 16', 18') von erstem und zweitem Kupplungsverschluß (1, 1'), insbesondere der erste und zweite Kupplungsverschluß, im wesentlichen baugleich sind.

20. Andockeinrichtung (66) nach Anspruch 18 oder 19, **dadurch gekennzeichnet, daß** die Rohrstutzen (2, 2'), insbesondere die Rohrstutzendichtungen (6, 6'), von erstem und zweitem Kupplungsverschluß (1, 1') bei Anlage derselben gegeneinander bündig abschließen.

21. Andockeinrichtung (66) nach einem der Ansprüche 18 bis 20, **dadurch gekennzeichnet, daß**
die Schließklappen (4, 4') im wesentlichen kreisförmig ausgebildet sind.

22. Andockeinrichtung (66) nach einem der Ansprüche 18 bis 21, **dadurch gekennzeichnet, daß** die Partialwellen bzw. -wellenstummel (16, 18; 16', 18') von erstem und zweitem Kupplungsverschluß (1, 1') unter Ausbildung einer Welle oder eines Wellenstummels (82, 84) in den durch die Lagerschalen (20, 20'; 22, 22') von erstem und zweitem Kupplungsverschluß (1, 1') gebildeten Lagern (88, 90) um eine gemeinsame Achse schwenkbar sind.

23. Andockeinrichtung (66) nach einem der Ansprüche 18 bis 22, **gekennzeichnet durch** mindestens eine Führungsvorrichtung (36, 38) für mindestens eine Partialwelle oder einen -wellenstummel (16, 18; 16', 18') mindestens einer Schließklappe (4, 4').

24. Andockeinrichtung (66) nach einem der Ansprüche 18 bis 23, **dadurch gekennzeichnet, daß** die Eingriffselemente (62, 62'; 64, 64') der eine Welle oder einen Wellenstummel (82, 84) bildenden Partialwellen bzw. -wellenstummel (16, 16'; 18, 18') ein einheitliches Eingriffselement (80) für ein korrespondierendes Eingriffselement einer Antriebswelle, insbesondere in Form einer Nut oder eines Doms, bilden.

25. Andockeinrichtung (66) nach einem der Ansprüche 18 bis 24, **gekennzeichnet durch** mindestens eine Antriebswelle oder eine mit einem Antrieb in Wirkverbindung bringbare Welle (54, 56), die mit mindestens einem Eingriffselement (58, 60) ausgestattet ist, das komplementär zu mindestens einem Eingriffselement (62, 62'; 64, 64') von erstem oder zweitem Kupplungsverschluß (1, 1'), insbesondere zu dem einheitlichen Eingriffselement (80) von erstem und zweitem Kupplungsverschluß, ist, so daß bei Eingriff dieser einander komplementären Eingriffselemente die aneinander anliegenden Schließklappen (4, 4') über den Antrieb schwenkbar sind.

26. Andockeinrichtung (66) nach einem der Ansprüche 18 bis 25, **gekennzeichnet durch** mindestens einen mit einer Antriebswelle (54, 56) in Wirkverbindung stehenden Antrieb (44).

27. Andockeinrichtung (66) nach einem der Ansprüche 18 bis 26, **gekennzeichnet durch** ein Wellenlager (48, 50) für die Antriebswelle (54, 56).

28. Andockeinrichtung (66) nach einem der Ansprüche 18 bis 27, **dadurch gekennzeichnet, daß** die Dichtungen (12, 12') der Schließklappen (4, 4') von erstem und zweitem Kupplungsverschluß (1, 1') jeweils nur abschnittsweise über deren Außenseiten (8, 8') hervorstehen, wobei diese Abschnitte (13a, 13b; 13a', 13b') der Dichtungen von erstem und zweitem Kupplungsverschluß bei aneinander anliegenden Außenseiten (8, 8') der Schließklappen (4, 4') eine im wesentlichen durchgängige umlaufende Dichtung ausbilden.

29. Andockeinrichtung (66) nach einem der Ansprüche 18 bis 28, **dadurch gekennzeichnet, daß**
die Rohrstutzen (2, 2') von erstem und zweitem Kupplungsverschluß (1, 1'), insbesondere auf jeweils einander gegenüberliegenden Bereichen der Seitenwände oder benachbart hierzu, über Kraftbeaufschlagungspunkte (30, 30'), insbesondere Vorsprünge, verfügen, über die im gekuppelten Zustand die Außenseiten (8, 8') von erstem und zweitem Kupplungsverschluß (1, 1') gegeneinander preßbar und/oder die Rohrstutzen (2, 2') von erstem und zweitem Kupplungsverschluß gegeneinander reversibel arretierbar sind.

30. Andockeinrichtung (66) nach Anspruch 29, **gekennzeichnet durch**
eine Verriegelungseinheit (68, 70), mit der aus im wesentlichen einander gegenläufigen Richtungen, insbesondere jeweils aus behälterseitiger Richtung, die Kraftbeaufschlagungspunkte (30, 30') von erstem und zweitem Kupplungsverschluß (1, 1') mit Kraft beaufschlagbar sind.

31. Andockeinrichtung (66) nach einem der Ansprüche 18 bis 30, **gekennzeichnet durch** eine Arbeitsplattform (32), auf der mindestens ein, insbesondere zwei Antriebe (44, 46), mindestens eine, insbesondere zwei Verriegelungseinheiten (68, 70) und gegebenenfalls mindestens ein, insbesondere mindestens zwei Wellenlager (48, 50) für eine Antriebswelle angebracht sind.

32. Andockeinrichtung (66) nach einem der Ansprüche 18 bis 31, **dadurch gekennzeichnet, daß**
der Rohrstutzen (2, 2') von erstem und/oder zweitem Kupplungsverschluß (1, 1') im Bereich der Partialwellen oder -wellenstummel (16, 18; 16', 18') mindestens einen Anschlag (40, 42) und/oder mindestens eine Führeinrichtung (36, 38) für das Wellenlager (48, 50) der Antriebswelle oder den Antrieb (44, 46) aufweist.

33. Andockeinrichtung (66) nach einem der Ansprüche 18 bis 32, **dadurch gekennzeichnet, daß**
der erste Kupplungsverschluß (1), insbesondere dessen Rohrstutzen (2), mit einem ersten Behälter und/oder Fördermittel und/oder der zweite Kupplungsverschluß (1'), insbesondere dessen Rohrstutzen (2'), mit einem zweiten Behälter und/oder Fördermittel dichtend verbunden oder verbindbar ist.

34. Andockeinrichtung (66) nach einem der Ansprüche 18 bis 33, **dadurch gekennzeichnet, daß**
die Eingriffselemente (62, 64) und/oder die Partialwellen oder die -wellenstummel (16, 18) von erstem und zweitem Kupplungsverschluß (1, 1') jeweils mindestens ein Partialarretierelement (92, 92') geeignet zur Ausbildung eines ersten Arretierelements (106) aufweisen und daß das komplementäre Eingriffselement (58, 60) oder die Antriebswelle (54) ein zu dem ersten Arretierelement (106) korrespondierendes zweites Arretierelement (94) aufweist und daß durch Relativbewegung von erstem und zweitem Arretierelement (106, 94) aufeinander zu eine Arretiereinheit (108) ausbildbar ist, wodurch die ersten und zweiten Kupplungsverschlüsse gegeneinander pressbar und/oder arretierbar sind.

35. Andockeinrichtung (66) nach Anspruch 34, **dadurch gekennzeichnet, daß**
die Partialarretierelemente (92, 92') von erstem und zweitem Kupplungsverschluß jeweils zumindest abschnittsweise eine der Behälterseite zugewandte, insbesondere in Bezug auf die gemeinsame Drehachse der Schließklappen (4, 4') radiale, Anlagefläche und/oder in den Stirnseiten der Partialwellen oder -wellenstummel eine, insbesondere jeweils zumindest abschnittsweise radial umlaufende, Nut und/oder Feder umfassen.

36. Andockeinrichtung (66) nach Anspruch 34 oder 35, **dadurch gekennzeichnet, daß**
die Partialarretierelemente (92, 92') von erstem und zweitem Kupplungsverschluß Bestandteil der Eingriffselemente (62, 64) von erstem bzw. zweitem Kupplungsverschluß sind und insbesondere ein erstes Arretierelement (106), insbesondere in Form eines Keils, Kegels oder Kegelstumpfes, ausbilden.

37. Andockeinrichtung (66) nach einem der Ansprüche 18 bis 36, **dadurch gekennzeichnet, daß**
die Stirnfläche des komplementären Eingriffselements (58, 60) in einem Winkel zueinander stehende und einander zugewandte erste und zweite Kontaktflächen (102, 104) aufweist, wobei bei axialer Relativbewegung des komplementären Eingriffselements zum Ineingriffbringen der Eingriffselemente (62, 64) bzw. des Gesamteingriffselements (114) von erstem und zweitem Kupplungsverschluß mit dem komplementären Eingriffselement (58, 60) die erste Kontaktfläche (102) des komplementären Eingriffselements (102) mit dem Eingriffselement des ersten Kupplungsverschlusses in Berührung bringbar ist und die zweite Kontaktfläche (104) des komplementären Eingriffselements mit dem Eingriffselement des zweiten Kupplungsverschlusses in Berührung bringbar ist, wodurch die ersten und zweiten Kupplungsverschlüsse gegeneinander preßbar und/oder arretierbar sind.

38. Andockeinrichtung (66) nach einem der Ansprüche 18 bis 37, **dadurch gekennzeichnet, daß**
die Partialwellen oder -wellenstummel des ersten und zweiten Kupplungsverschlusses jeweils zumindest bereichsweise über eine, insbesondere in Bezug auf die Drehachse radiale, Anschlagsfläche als Partialarretierelemente verfügen, die unter Ausbildung eines ersten Arretierelements (106) zumindest bereichsweise voneinander weg und zur jeweiligen Behälterseite des Kupplungsverschlusses weisen, und daß das komplementäre Eingriffselement und/oder die Antriebswelle als korrespondierendes zweites Arretierelement (94) stirnseitig über einander im wesentlichen gegenüberliegende und einander zumindest bereichsweise zugewandte, insbesondere in Bezug auf die Drehachse radiale, Kontaktflächenabschnitte verfügen, durch die beim Ineingriffbringen der Eingriffselemente bzw. des Gesamteingriffselements (114) von erstem und zweiten Kupplungsverschluß mit dem komplementären Eingriffselement durch Wechselwirkung mit den Anschlagsflächen von erstem und zweitem Kupplungsverschluß diese gegeneinander preßbar und/oder arretierbar sind.

39. Andockeinrichtung (66) nach einem der Ansprüche 34 bis 38, **dadurch gekennzeichnet, daß**
das korrespondierende zweite Arretierelement einen, insbesondere zumindest abschnittsweise das komplementäre Eingriffselement umgebenden, Zylinderabschnitt umfaßt.

40. Andockplattform (32) für eine Andockeinrichtung zum, insbesondere umweltdichten, Transfer von Schüttgut, **gekennzeichnet durch**
mindestens einen, insbesondere zwei, auf einer Plattform (32) angebrachte Antriebe (44, 46), eine Durchgangsöffnung (34) in der Plattform (32) für einen Kupplungsverschluß einer Andockeinrichtung sowie gegebenenfalls mindestens eine, insbesondere zwei Verriegelungseinheiten (68, 70) für die Arretierung und/oder das Zusammenpressen der Außenseiten von Schließklappen angedockter Kupplungsverschlüsse einer Andockeinrichtung und/oder mindestens ein Wellenlager (48, 50) für eine Antriebswelle, die mit dem Antrieb in Wirkverbindung steht.

41. Andockplattform (32) nach Anspruch 40, ferner umfassend mindestens einen Kupplungsverschluß (1) gemäß einem der Ansprüche 1 bis 14.

42. Verfahren zum, insbesondere umweltisolierten, Umfüllen, Befüllen und/oder Entleeren von Behältnissen, umfassend die Schritte:
- Zurverfügungstellung eines ersten mit einem ersten Behältnis verbundenen Kupplungsverschlusses gemäß einem der Ansprüche 1 bis 17, wobei die Schließklappe sich in der Schließstellung befindet,
- Zurverfügungstellung eines zweiten mit einem zweiten Behältnis verbundenen Kupplungsverschlusses gemäß einem der Ansprüche 1 bis 17, wobei die Schließklappe sich in der Schließstellung befindet,
- Kuppeln der ersten und zweiten Kupplungsverschlüsse über ihre jeweiligen Verschlußseiten unter Ausbildung einer Andockeinrichtung gemäß einem der Ansprüche 18 bis 39,
- Inwirkverbindungbringen der Antriebswelle eines Antriebs mit der Welle der Andockeinrichtung unter Ineingriffbringen des Eingriffelements der Welle der Andockeinrichtung mit der komplementären Eingriffseinheit der Antriebswelle,
- Schwenken der aneinander anliegenden Schließklappen aus der Schließstellung in eine den Transferkanal zumindest teilweise freigebende Stellung durch Betätigen des Antriebs,
- Überführen von Schüttgut aus dem ersten Behältnis in das zweite Behältnis, oder umgekehrt,
- Schwenken der aneinander anliegenden Schließklappen in die Schließstellung durch Betätigen des Antriebs,
- Entkoppeln von erstem und zweitem Kupplungsverschluß unter Trennung der Andockeinrichtung.

43. Verfahren nach Anspruch 42, **dadurch gekennzeichnet, daß**
vor dem Schwenken der aneinander anliegenden Schließklappen aus der Schließstellung die gekoppelten Kupplungsverschlüsse der Andockeinrichtung durch mindestens eine, insbesondere zwei Kraftbeaufschlagungseinrichtungen gegeneinander arretiert und/oder gepresst werden und daß nach dem Schwenken der aneinander anliegenden Schließklappen zurück in die Schließstellung die Kraftbeaufschlagungseinrichtung die ersten und zweiten Kupplungsverschlüsse wieder freigibt.

44. Verriegelungseinheit (68), geeignet für die Verriegelung zweier Rohrstutzen von Kupplungsverschlüssen, umfassend
einen um eine Achse drehbaren Körper mit einer Verriegelungsseite, wobei auf der Verriegelungsseite des Körpers mindestens ein erstes hervortretendes Element und mindestens ein zweites hervortretendes Element angebracht sind oder vorliegen, wobei das erste und das zweite Element zumindest bereichsweise in einer Ebene liegen, die im wesentlichen einen Winkel zur Drehachse aufweist, insbesondere senkrecht zur Drehachse steht, wobei das erste Element und das zweite Element jeweils einen Abstand zur Drehachse aufweisen, der kleiner ist als der Abstand von erstem und zweitem Element zueinander, und wobei die ersten und zweiten Elemente durch Rotation des Körpers um die Drehachse von einer Verriegelungsstellung in eine Öffnungsstellung und umgekehrt bringbar sind.

45. Verriegelungseinheit (68) nach Anspruch 44, **dadurch gekennzeichnet, daß**
die Drehachse im wesentlichen die Verbindungslinie zwischen dem ersten und zweiten Element schneidet.

46. Verriegelungseinheit (68) nach Anspruch 44 und 45, **dadurch gekennzeichnet, daß**
das erste und/oder zweite Element eine der Drehachse zugewandte Druckbeaufschlagungsfläche aufweisen, insbesondere in Form einer zumindest bereichsweise konkav gewölbten Fläche.

47. Verriegelungseinheit (68) nach einem der Ansprüche 44 bis 46, **dadurch gekennzeichnet, daß**
das erste und/oder zweite Element eine Rolle, insbesondere eine um eine Achse drehbar gelagerte Rolle aufweist, wobei die Drehachse dieser Rollen insbesondere im wesentlichen parallel zur Drehachse des Körpers sind.

48. Verriegelungseinheit (68) nach einem der Ansprüche 44 bis 47, ferner umfassend
erste und zweite Druckbeaufschlagungseinrichtungen, auf die über das erste und zweite Element durch Rotation des Körpers um die Drehachse kraftbeaufschlagbar ist aus in etwa gegenläufigen Richtungen.
